# EUROPEAN PATENT SPECIFICATION

(11) **EP 2 017 691 B1**
(45) Date of publication and mention of the grant of the patent: **30.08.2017**
(21) Application number: 08104786.2
(22) Date of filing: 18.07.2008
(51) Int. Cl.: G06F 1/16, G06K 7/10

(54) **Method, system and support mechanism for object identification**
Verfahren, System und Hilfsmechanismus zur Gegenstandsidentifizierung
Procédé, système et mécanisme de support pour identification d'objet

(30) Priority: 18.07.2007 CA 2594076
(43) Date of publication of application: 21.01.2009
(73) Proprietor: Psion Inc., Mississauga, ON L5N 7J9 (CA)
(72) Inventor: Stagg, Adrian Joseph, Ontario M8V 2X8 (CA)
(74) Representative: Lorenz & Kopf PartG mbB Patentanwälte, LKGLOBAL

(56) References cited:
- US-A- 5 517 434

## Description

### FIELD OF INVENTION

The present invention relates to signal processing technology and more particularly to a method, system and support mechanism for object identification.

### BACKGROUND OF THE INVENTION

Identification of objects and digitization of the identification data allows for control of the flow of said objects through a distribution system, and improves the visibility of objects in the system, to the software controlling the system itself and to remote human observers of the system.

Digitization of the location and identity of objects in the system allows for automatic routing of objects in the system to their correct destination via logical software control. It also allows for improved efficiency of the overall system by allowing the present location of an object to be known, and therefore it's likely time of arrival to be better estimated.

Automatic identification is a process which allows the identity of objects to be determined without human intervention. Automatic identification is highly desirable in such a system, because of the time saved by not having to rely on a human operator to manually identify an object.

One of the most efficient Automatic identification methods is Radio Frequency Identification (RFID), which uses radio waves to power a passive identification tag, so that said tag can reflect identification data stored on the tag back to the RFID interrogator. Identification using RFID is extremely fast, currently allowing for identification of up to 2400 RFID tags per second, by a single interrogator, under ideal conditions.

Another method of Automatic identification can be achieved by capturing an image of an object and using machine intelligence to identify the object based on the object's shape and other characteristics.

Manual identification is an identification process in which the human intervention is involved. Manual identification can be efficiently achieved by fixing a symbolic representation of identifying data to an object, in the form of a 1D or 2D barcode, and reading said barcode using methods such as laser scanning or image capture.

Reliable identification can be achieved by a trained human operator reading a printed description of an object, or merely identifying said object based on visual indicators such as the object's shape, colour size and other attributes, and then feeding the gathered identification data into an electronic system.

US 5,517,434 discloses a portable battery operated data terminal a scanner, a docking unit for mounting the terminal, and a holster for receiving and retaining the scanner. In US 5,517,434, when operating the scanner, the operator grips a handle grip part of the scanner and operates a trigger.

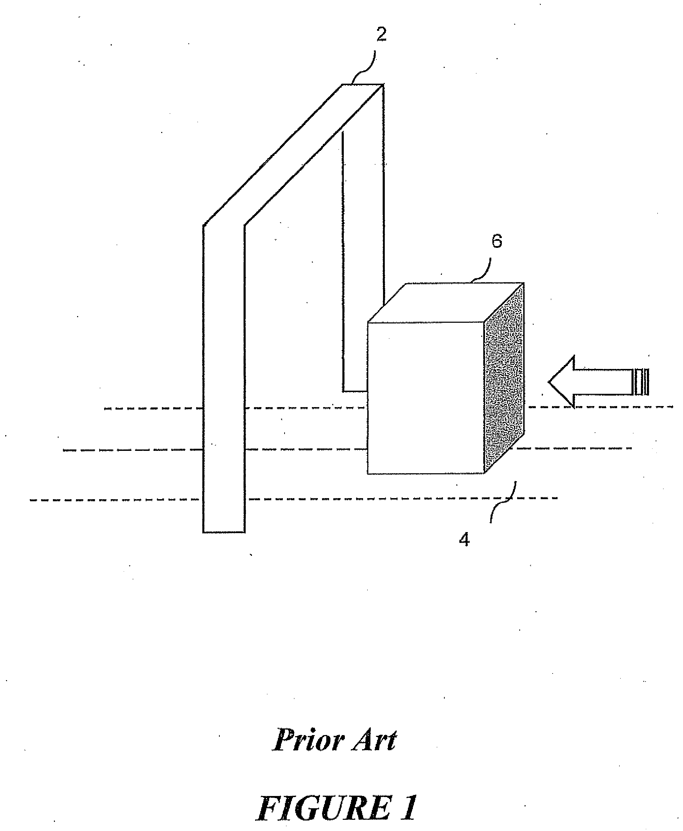

Figure 1 illustrates a conventional RFID portal reader and an object to be identified. An object 6, which needs to be identified and is placed on a conveyer 4, moves through an RFID portal reader 2. The RFID portal reader 2 identifies the object 6, as long as interference, reflections or absorption of the identifying radio frequency signal do not prevent the identification from being successful. If the identification is not successful, the object 6 must stop, and a human operator is summoned to manually identify the object, using a handheld terminal to scan a barcode, or entering identification data into the handheld terminal.

All of the above means of identification have problems associated with their use. Although extremely fast, RFID is not a completely reliable means of identification. RFID may fail due to the sensitive nature of electromagnetic radiation at radio frequencies to interference, reflection and absorption of the radio waves. Image capture for Automatic identification requires a well illuminated subject, and either a fast microprocessor which consumes a large amount of power, or a long time to process the image, and extract a reliable identification. Manual identification of any means including barcode reading is undesirable because of the need for a human operator. Human visual identification is even more undesirable because of the time it takes for a human to feed the information into an electronic system, and because of the possibility of human error.

A system employing Automatic identification, such as RFID, can allow for a very high throughput of objects through the system, but to sustain this high throughput, some quality of identification must be compromised due to the inherent problems with this identification method. If the objects in the system have a high value associated with them, letting the quality of identification fall to maintain the throughput is undesirable, the value added by moving objects through the system quickly may be lost if there are any opportunities for high value items to get lost or stolen. The case where an automatic system of identification fails is known as an exception. The speed which this exception can be resolved so that the object can continue through the system is the limiting factor of the system, if quality is to be maintained.

Automatic identification systems also rely on the fact that all of the objects in the system have a functioning RFID tag attached. Only the largest corporations can mandate that the external suppliers into the system attach an RFID tag to an object before it enters the system, and applying RFID tags to all objects is currently not economically viable, because the RFID tag's value could be high compared to the object it is applied to.

The conventional Automatic identification systems have to employ a backup means of identification for handling exceptions, which usually takes the form of a handheld computer terminal which has one or more identification sensors fitted, such as a portable RFID reader, barcode scanner or image capture sensor. This handheld computer is a separate entity from the primary means of Automatic identification, and as such has its own capital cost, and cost of ownership associated, on top of the cost of the primary, and unreliable Automatic identification system.

Current implementations of RFID Portal readers are usually permanent structures fixed to a frame surrounding a door. If the business process is changed, requiring Automatic identification to occur in a different location, moving the Automatic identification system to a new location is a time consuming and expensive undertaking.

Accordingly there is a need for a combination of Manual and Automatic identification, and a method of efficiently combining Manual and Automatic identification to provide a fast means of accurate identification, while allowing the entire apparatus to be somewhat portable.

### SUMMARY OF THE INVENTION

It is an object of the invention to provide a method and system that obviates or mitigates at least one of the disadvantages of existing systems. The invention is as defined in the appended claims.

In accordance with an aspect of the present invention, there is provided a system for object identification. The system includes a handheld terminal. The handheld terminal includes one or more than one sensor for data capture and identification of an object. The sensor is automatically or manually activated. The handheld terminal includes a rechargeable power storage for operation of the handheld terminal, and a housing including a grip hold by an operator. The system includes a fixture for securely supporting the terminal for a portal use. The fixture includes a shaft and a docking member on the shaft. The docking member includes a docking structure for removably connecting to the handheld terminal, and a docking connector for operably connecting an external device to the handheld terminal when the handheld terminal is connected to the docking structure. The fixture includes a support base for supporting the shaft and the handheld terminal on the docking structure.

In accordance with a further aspect of the present invention, there is provided a fixture for a handheld terminal having one or more than one sensor for data capture and object identification. The fixture includes a docking structure. The handheld terminal is docked onto the docking structure for a portal use. The fixture includes a docking connector for operably connecting an external device to the handheld terminal when the handheld terminal is connected to the docking structure.

In accordance with a further aspect of the present invention. there is provided a handheld terminal for data capture and identification. The terminal includes one or more than one sensor for data capture and identification of an object. The sensor is automatically or manually activated. The terminal includes a rechargeable power storage for operation of the terminal and a controller for controlling the function of the terminal. The terminal includes a first interface for manual input by an operator. An input from the first interface is capable of activating at least one of the one or more than one sensor. The terminal includes a second interface including a wired network interface, a wireless network interface or a combination thereof. An input from the second interface is capable of activating at least one of the one or more than one sensor.
The terminal includes a housing having a grip and a connection member for removably connecting to a fixture for a portal use such that the power storage is chargeable through the connection member and a signal communication is implemented between the terminal and the fixture via the connection member.

In accordance with a further aspect of the present invention, there is provided a method for object identification and authentication by a system having a handheld terminal for data capture and identification and a fixture for removably connecting to the handheld terminal for a portal use. The handheld terminal includes one or more than one sensor for data capture and identification. The method includes in an idle state, polling detection mechanism to detect an object, and entering an object detect state when the object is detected. The method includes in the object detect state, automatically identifying the object by at least one of the one or more than one sensor in the handheld terminal docked on the fixture, entering an authentication state when the object is identified or entering an automatic identification fail state when the system fails to automatically identify the object. The method includes in the authentication state, authenticating the object and entering the idle state. The method includes in the automatic identification fail state, rejecting the object or removing the terminal from the fixture and entering a manual identification state. The method includes in the manual identification state, operating the handheld terminal by an operator without the fixture to manually identify the object, and entering the authentication state when the object is manually identified or rejecting the object when the system fails to manually identify the object.

The present invention provides reliable, fast identification of items at specific points as they travel through a system, by combining manual and automatic identification technologies.

This summary of the invention does not necessarily describe all features of the invention.

### BRIEF DESCRIPTION OF THE DRAWINGS

These and other features of the invention will become more apparent from the following description in which reference is made to the appended drawings wherein:
Figure 1 is a schematic diagram of a conventional RFID portal reader and an item to be tracked;
Figure 2 is a block diagram illustrating an example of an apparatus for manual and automatic object identification in accordance with an embodiment of the present invention;
Figure 3 is a block diagram illustrating another example of the apparatus for manual and automatic object identification;
Figure 4 is a block diagram illustrating a further example of the apparatus for manual and automatic object identification;
Figure 5 is a schematic diagram illustrating an example of a protection circuit of Figure 4;
Figure 6 is a diagram illustrating an example of the apparatus of Figure 2;
Figure 7 is a diagram illustrating an example of a handheld data capture and identification terminal, a docking member and a positioning member of Figure 2;
Figure 8 is a block diagram illustrating an example of an object identification and authentication system in accordance with an embodiment of the present invention;
Figure 9 is a block diagram illustrating another example of the object identification and authentication system;
Figure 10 is a flowchart illustrating of an example of method for object identification and authentication in accordance with an embodiment of the present invention; and
Figure 11 is a block diagram illustrating an example of a fixture in accordance with a further embodiment of the present invention.

### DETAILED DESCRIPTION

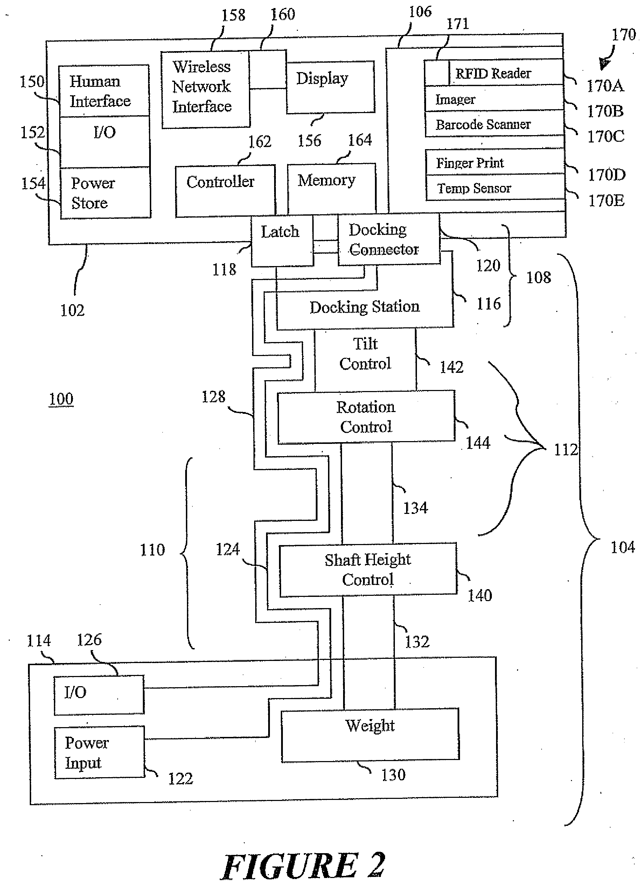

Figure 2 illustrates an example of an apparatus for manual and automatic identification in accordance with an embodiment of the present invention. The apparatus 100 of Figure 1 includes a removable handheld data capture and identification terminal 102 and a fixture 104 for securely supporting the handheld terminal 102. The terminal 102 is removable docked onto the fixture 104. The terminal 102 is operated without intervention of the human operator. The terminal 102 is operable under the guidance of the human operator without the fixture 104 (stand alone) if required.

In the description, the terms "(removable) handheld data capture and identification terminal 102" and "(handheld) terminal 102" are used interchangeably. In the description, the terms "connect (connected)", "couple (coupled)", "engage (engaged)" may be used interchangeably, and these terms may indicate that two or more elements are in physical or electrical contact with each other. In the description, the terms "removable (removably)" and "releasable (releasably)" may be used interchangeably.

In the description below, the terms "automatic identification" and "automatically identifying" indicate that an object is identified without intervention of a human operator. In the description below, the terms "manual identification" and "manually identifying" indicate that the object is identified under the guidance of the human operator. In the description, the terms "human operator", "operator", and "observer" may be used interchangeably.

The handheld data capture and identification terminal 102 includes a sensor module 106 having one or more Automatic Identification and Data Capture (AIDC) sensors 170. The AIDC sensors 170 include, for example, an RFID reader 170A with antenna 171, an imaging sensor 170B, a (laser) barcode scanner 170C, a fingerprint scanner 170D, and a thermal image sensor 170E. The sensor module 106 may include any other AIDC sensors, for example, magnetic stripes, smart cards, sound recognition, or other biometrics. These sensors 170A-170E are largely placed at the front part of the terminal 102.

When the handheld data capture and identification terminal 102 is docked onto the fixture 104, the apparatus 100 is configured for automatic identification. When in the automatic identification configuration, the terminal 102 becomes the active component of the automatic identification apparatus so that objects are identified without intervention of the operator.

The operator may remove the handheld data capture and identification terminal 102 from the fixture 104 and operate the handheld terminal 102 to manually identify the objects by a plurality of methods, if required. The full-range of identification methods is available to the human operator (e.g., RFID 170A, barcode scanner 170C, image capture 170B, and manual identification followed by data entry). For example, if there is an obscured or read range limited RFID tag, the human operator may use the terminal 102 to expedite the reading of the RFID tag. If there is a barcode, the operator may operate the terminal 102 to scan the barcode. If there are no other means of identification, the operator enters the identity of the object into the terminal 102 through a user interface.

The fixture 104 includes a docking member 108, a shaft 110 connected to the docking member 108, a positioning member 112 for positioning the handheld data capture and identification terminal 102 on the docking member 108, and a support base 114. The terminal 102 is releasably docked onto the fixture 104 through the docking member 108.

The docking member 108 includes a docking station 116, a latch member 118 and a docking connector 120. The docking station 116 is located at the top of the shaft 110. The handheld data capture and identification terminal 102 is removably connected to the docking station 116 by the latch member 118. The latch member 118 includes, for example, one or more than one latch. The latch member 118 retains the terminal 102 onto the docking station 116 by engaging with the terminal 102 and the docking station 116.

The docking connector 120 is in two parts that mate with together when the handheld data capture and identification terminal 102 is docked on the fixture 104. One part of the docking connector 120 is coupled with the terminal 102, and the other is coupled with the fixture 104.

The docking connector 120 allows power and digital signals to enter the handheld data capture and identification terminal 102. The fixture 104 supplies power to the terminal 102 through the docking member 108, such that the terminal 102 becomes charged and systems comprising the terminal 102 are powered. The docking connector 120 also supports data communication between the terminal 102 and the fixture 104. The docking connector 120 allows data to enter the support base 114 from the terminal 102 and to enter the terminal 102 from the support base 114.

The positioning member 112 articulates the handheld data capture and identification terminal 102 such that when the handheld terminal 102 is engaged with the fixture 104, the AIDC sensors 170 are ideally positioned for the automatic identification, as described below.

The support base 114 includes a power input connector 122. The power input connector 122 communicates with the docking connector 120 via a power connection 124. The power input connector 122 may accept AC power, DC power or a combination thereof. The power input connector 122 allows an external AC/DC adaptor to be connected to the fixture 104. Alternatively, an AC/DC converter is provided internally to the fixture 104, such that AC power can be connected directly to the fixture 104. The power received by the power input connector 122 is routed through the fixture 104, and supplied to the docked terminal 102 via the docking connector 120.

In Figure 2, the power input connector 122 is located in the support base 114. However, in anther example, the power input connector 122 may be located in the fixture 104 other than the support base 114 or may be located in the handheld data capture and identification terminal 102.

In one example, the power connection 124 may be located outside the shaft 110. In another example, the power connection 124 may be located in the shaft 110 or the fixture 104.

In Figure 2, one power input connector 122 and one power connection 124 are shown. However, in a further example, the apparatus 100 may include more than one power input connector 124 and more than one power connection 124.

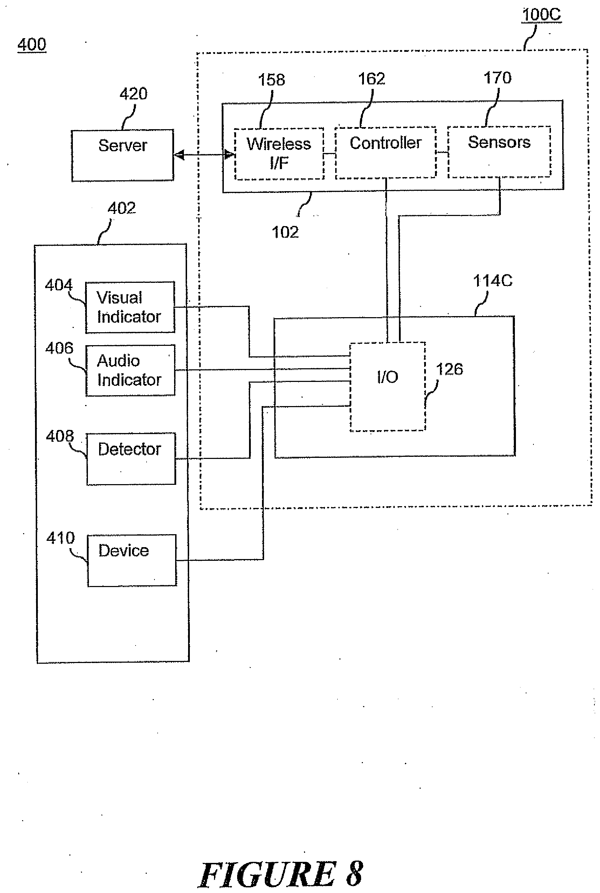

The support base 114 includes an Input/Output (I/O) connector 126 for connecting digital I/O devices (e.g., 402 of Figure 8). The I/O connector 126 communicates with the docking connector 120 via an I/O connection 128. Examples of the digital input devices connected to the I/O connector 126 are various forms of presence and proximity detection (e.g., 408 of Figure 8) such as ultrasonic sensors, pressure sensors, optical detectors, and infra-red, where the proximity/presence signal is converted into a digital signal. Either a digital "zero" or a digital "one" on the input may indicate the presence of the object. Examples of the digital output devices connected to the I/O connector 126 are various forms of control, such as conveyor belt on/off signal (e.g., 410 of Figure 8), external alarm on/off signal (e.g., 406 of Figure 8), and on/off signals for various coloured lights on a light stack (e.g., 404 of Figure 8). A digital "one" may indicate one condition of an external device, and a digital "zero" may indicate another condition (e.g., the opposite condition). The combination of the digital "zero" and "one" may indicate the other condition. The I/O connector 126 may communicate with a server (e.g., 420 of Figure 8) using a wired commutation interface.

The output connection of the I/O connector 126 or the I/O connection 128 may source up to a certain amount of current, such as 100mA or 1000mA, at a pre-determined voltage when enabled, such that external hardware can be powered. The input connection of the I/O connector 126 may include a wired network interface, a wireless network interface or a combination thereof.

In Figure 2, the I/O connector 126 is located in the support base 114. However, in anther example, the I/O connector 126 may be located in the fixture 104 other than the support base 114 or may be located in the handheld data capture and identification terminal 102.

In one example, the I/O connection 128 is located outside the shaft 110. In another example, the I/O connection 128 may be located in the shaft 110 or the fixture 104.

In Figure 2, one I/O connector 126 and one I/O connection 128 are shown. However, in a further example, the apparatus 100 may include more than one I/O connector 126 and more than one I/O connection 128.

The support base 114 includes a member for stabilizing the entire apparatus 100. The stabilizing member includes, for example, a weight 130 sufficient to prevent the entire apparatus 100 tipping over upon an external force being applied to the apparatus 100 or to prevent damage to the apparatus 100. For example, such force may be applied by a human operator walking into the fixture 104. The external force may be up to and including x Newtons which is a vector component and is a force proportional to the mass of the weight 130. The weight 130 allows a reasonable external force to be applied to the apparatus 100 while preventing the apparatus 100 to tip over or preventing damage to the apparatus 100. The weight 130 may be detachably connected to the support base 114 so that the fixture 104 is easily moved without the weight 130.

The base of the shaft 110 is fixed to the support base 114, and the shaft 110 protrudes from the support base 114. In Figure 2, the shaft 110 is illustrated separately from the support base 114. However, in another example, the shaft 110 and the support base 114 may form a single unit. In another example, the stabilization member may include a joint member for receiving or absorbing an external force applied to the shaft 110 or the handheld terminal 102 on the shaft 110 to maintain the apparatus 110. The base of the shaft 110 may be attached to the support base 114 via the joint member. The weight 130 may include the joint member.

The shaft 110 may include two separate shaft sections; a lower shaft 132 and an upper shaft 134, which allow the shaft 110 and therefore the active component at the top of the shaft 110, to be manipulated in various ways, such that the active component are arranged for the most success in automatically identifying suitable objects.

The positioning member 112 includes a shaft height control member 140 for altering the height of the shaft 110. For example, using the positioning member 112, one of the shaft members 132 and 134 slides inside the other shaft member in a telescoping manner.

The positioning member 112 includes a tilt/elevation controller 142 for titling/elevating the handheld data capture and identification terminal 102 around the axis of the shaft 110. The shaft 110 is articulated such that the elevation of the active component is adjustable by the tilt/elevation controller 142.

The positioning member 112 includes a rotation controller 144 for rotating the handheld data capture and identification terminal 102 around the axis of the shaft 110. The shaft 110 is articulated such that the active component is oriented around the axis of the shaft 110. The AIDC sensors 170 are pointed largely in any direction by the positioning member 112.

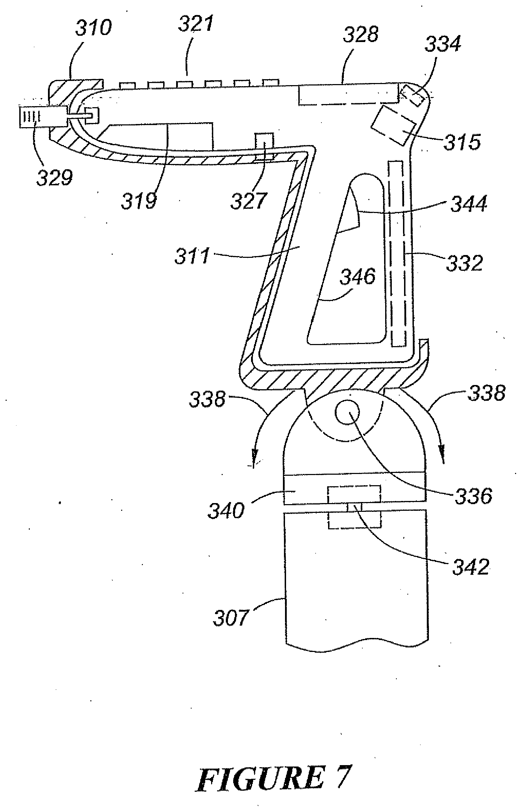

The handheld data capture and identification terminal 102 includes a human interface 150. The human interface 150 may include, but not limited to, a keypad (e.g., 321 of Figure 7), a touch-screen, a pen-type input device, a joystick, a trackball or combinations thereof. The keypad and the touch-screen allow an operator to manually enter alphanumeric data into the terminal 102. The human interface 150 may include any mechanism, such as a mechanical switching mechanism (e.g., 344 of Figure 7) through which the operator communicates with the terminal 102. The human interface 150 may include sound recognition through which an operator inputs command/instructions to operate the terminal 102. The human interface 150 may be used to activate one or more than one of the AIDC sensors 170. The human interface 150 may be used to trigger a detection event or an identification event for the one or more than one of the AIDC sensors. The human operator may manually input an object identification via the human interface 150.

The handheld data capture and identification terminal 102 includes I/O 152. Through the I/O 152, external devices are connectable to the terminal 102. The I/O 152 provides future expansion of the terminal's capabilities.

The handheld data capture and identification terminal 102 draws power from a power store (or storage) 154. The power store 154 includes, for example, but not limited to, a re-chargeable battery, and may be removable, or internal to the terminal 102. Power provided from the support base 114 is used to charge the power store 154 so that the terminal 102 draws power from the power store 154 and therefore continues to operate when the terminal 102 is separated from the fixture 104

The handheld data capture and identification terminal 102 includes an electronic display 156 for displaying information to the operator of the terminal 102. The touch-screen may be combined with the display 156.

The handheld data capture and identification terminal 102 includes a wireless network interface 158 with an antenna 160 through which the terminal 102 is capable of communicating data obtained by the sensors 170 (e.g., identification data, detection data) and other data entered into it to external systems, such as a server (e.g., 420 of Figure 8) on the network or receiving data/information from the external systems. The wireless network interface 158 may include, but not limited to, a wireless LAN interface, a narrowband interface, a Wi-Max interface, or combinations thereof. The wireless network interface 158 may include a short-range wireless interface. The short-range wireless interface may include, for example, but not limited to, Bluetooth™, wireless USB or wireless zigbee™.

In Figure 2, one wireless network interface 158 is shown. However, the handheld data capture and identification terminal 102 may include more than one wireless network interface 158.

A digital controller 162 is provided to control the various functions of the handheld data capture and identification terminal 102. The controller 162 allows data obtained by the AIDC sensors (e.g., identification data, detection data) to be communicated to the wireless network via the wireless network interface 158. The controller 162 is also capable of providing control signals to the support base 114 via the I/O connection 128 based on the identification result. The controller 162 has access to a memory 164, so that identification data is stored in the event that the terminal 102 cannot access the wireless network and said identification data is transmitted when the network becomes available. The controller 162 communicates with one or more than one components of the handheld data capture and identification terminal 102, such as human interface 150, the I/O 152, the power store 154, and the network interface 158, in addition to the sensor module 106 and the memory 162. The memory 164 may include, but not limited to, a non-volatile memory, a volatile memory, or a combination thereof.

The sensor module 106 captures data and identifies objects based on the control of the controller 162. For the object identification, the controller 162 may control the sensor module 106 based on instructions from external systems (e.g., 402, 420 of Figure 8) or manual inputs (e.g., 150), its embedded instructions, or combination thereof. The AIDC sensors 170 may be automatically activated. The AIDC sensors may be manually activated when the handheld data capture and identification terminal 102 is removed from the fixture 104, if required. An identification event may be automatically triggered or manually triggered if required.

In an example, the identification event is automatically triggered based on data captured by the handheld data capture and identification terminal 102. In anther example, the identification event is automatically triggered by an external input received through the I/O connector 126 or a wireless communication through the wireless network interface 158. For example, the image sensor 170B may automatically capture data for detecting an object, and the RFID reader 170B or the barcode scanner 170C then automatically identifies the detected object.

In a further example, the operator may operate the RFID reader 170A, the barcode scanner 170C or a combination thereof, properly after removing the terminal 102 from the fixture 104. In a further example, the operator may manually input data associated with the object (e.g., identification data) to the terminal 102.

The data associated with the object (e.g., identification data), which is manually or automatically obtained, is transferred to external devices/systems (e.g., 420 of Figure 8). The external devices/systems may provide feedback to the handheld data capture and identification terminal 102.

The objects, which are to be identified, may be on a conveyor belt, or may be transported on a vehicle such as a forklift truck or hand jack, or may be carried by a human operator. Using the apparatus 100 of Figure 2, the objects are allowed to travel through a system having the apparatus 100 as quickly as possible by implementing automatic identification where possible, and/or implementing manual identification if required. The manual identification is achievable with the minimum disruption to the flow of the object, while maintaining a high accuracy of identification of said objects.

The apparatus 100 may include a device outputting signals sensible by the human operator (e.g., visible light device, audio device). The visual light device and the audio device may be located in the handheld data capture and identification terminal 102, the fixture 104 or a combination thereof. The visual light device and the audio device may be controlled by the controller 162. The visible light device and the audio device may be used to indicate the state/mode of the terminal 102, the apparatus 100 or a combination thereof. The operator may remove the terminal 102 from the fixture 104 based on the output from the visible light device or the audio device.

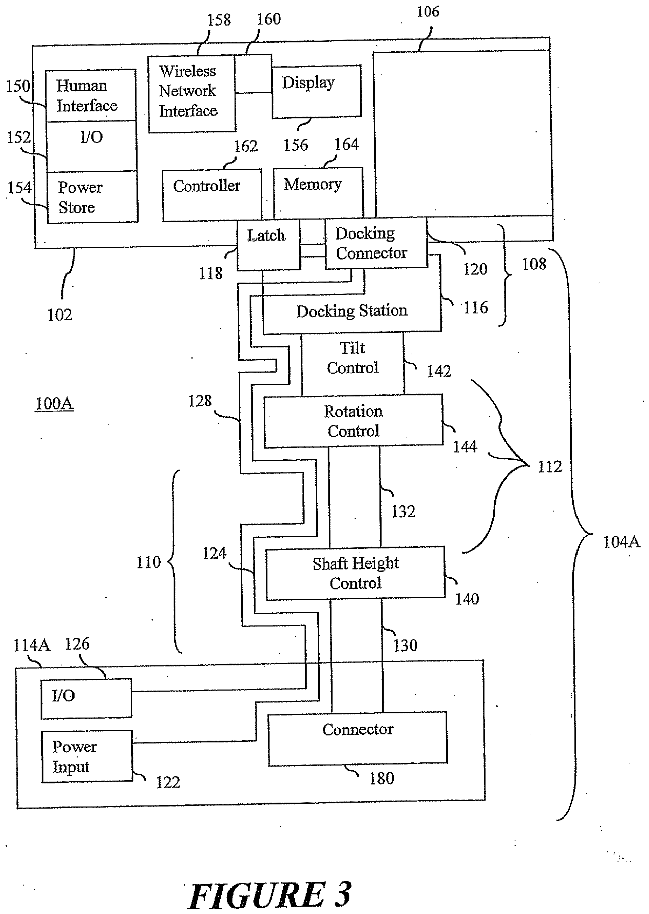

Figure 3 illustrates another example of the apparatus for manual and automatic identification. The apparatus 100A of Figure 3 includes a fixture 104A having a support base 114A. The fixture 104A is similar to the fixture 104 of Figure 2. The support base 114A includes a stabilization member having a connector 180 for more or less permanently attaching the fixture 104A to a floor, a wall or a ceiling. The support base 114A may be fixed to a vehicle (e.g., forklift truck) by the connector 180. The connector 180 may include, but not limited to, one or more holes for the use of one or more bolts or rivets. The weight 130 of Figure 2 is not illustrated in Figure 3, since an external force may be not applied to a motorized vehicle (e.g., a forklift truck) colliding with the fixture 104A. However, the support base 114A may include the weight 130.

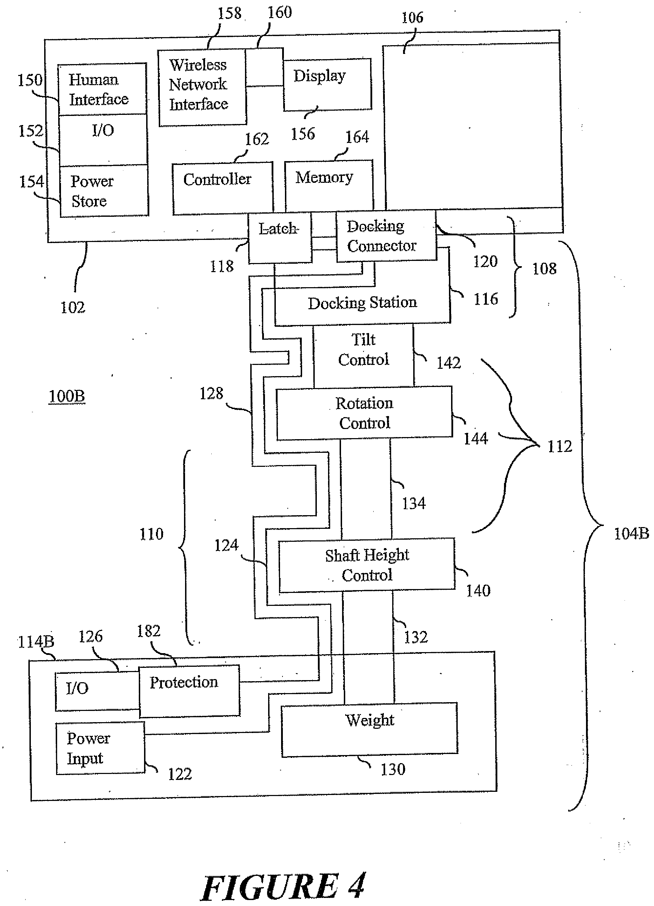

Figure 4 illustrates a further example of the apparatus for manual and automatic identification. The apparatus 100B of Figure 4 includes a fixture 104B having a support base 114B. The fixture 104B is similar to the fixture 104 of Figure 2. The support base 114B includes a protection circuit 182 for preventing damage to the connected handheld data capture and identification terminal 102, upon a fault condition such as electro-static discharge, over voltage, over current, etc. The connection from the protection circuit 182 is routed through the fixture 104B and supplied to the docked terminal 102 via the docking connector 120. The support base 114A of Figure 3 may include the protection circuit 182 of Figure 4.

In Figure 4, the protection circuit 182 is connected to the I/O connection 128. However, in another example, the protection circuit 182 may be connected to the power connection 124. In a further example, the protection circuit 182 is provided to both of the I/O connection 128 and the power connection 124. In a further example, a connection between the protection circuit 182 and the docking connector 120 may be provided separately from the I/O connection 128. In a further example, the apparatus 100B may include more than one protection circuit 182. In a further example, a plurality of protection circuits 182 are provided to one or more than one power connection 124 and one or more than one I/O connection 128. In a further example, the protection circuit 182 may be located in the fixture 104B other than the support base 114B or the handheld data capture and identification terminal 102.

Those of skill in the art will understand that the representation of the terminal 102 and the fixtures 104, 104A and 104B of Figures 2-4 is schematic only, and the actual configuration of the terminal 102 and the fixture may take on a variety of configurations.

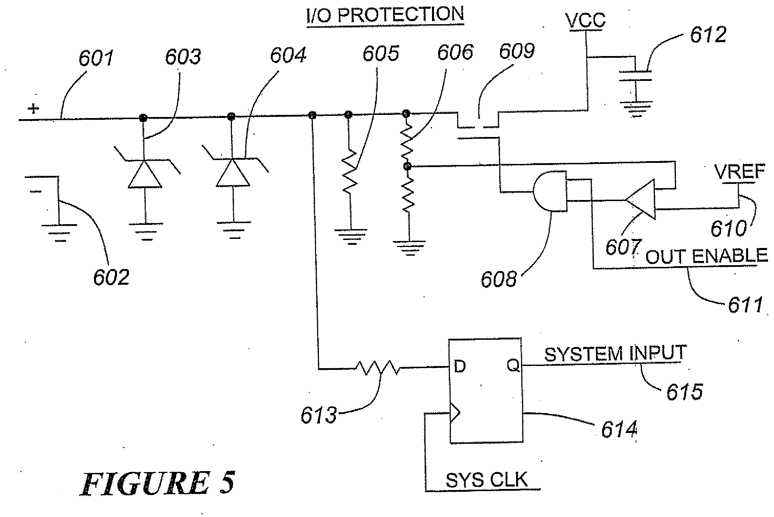

Figure 5 illustrates an example of the protection circuit 182 of Figure 4. "601" and "602" represents the positive and negative terminals of the I/O port. Static protection diode 603 is a fast diode which protects the system against electrostatic discharge. Zenner Diode 604 has a high power rating, and will allow current to flow to ground if a voltage above its breakdown voltage is applied between the terminals 601 and 602, providing over voltage protection. Resistor 605 sets the I/O ports default condition. Comparator 607 compares the input from a potential divider 606 to a reference input 610, only producing a high output when the voltage between the terminals 601 and 602 is above a predetermined value. If the voltage between the terminals 601 and 602 drops below a pre determined value, the output of the comparator 607 will become low. AND gate 608 allows current to flow through FET 609 when both of its inputs are positive. Out enable signal 611 is positive, as well as the output of the comparator 607 for the FET 609 to be enabled. If too much current is drawn from the terminals 601 and 602, the resulting voltage drop will be detected by the comparator 607, and the FET 609 will be turned off, providing over current protection. Capacitor 612 provides a low impedance current source, to smooth any rapidly increasing current demands. Resistor 613 provides input current protection, and flip-flop 614 synchronizes an input present on its D input to the system clock, providing protection from meta-stability. More than one flip-flop may be cascaded to provide further protection from meta-stability. The output 615 of the flip-flop 614 is the post protection input to the system.

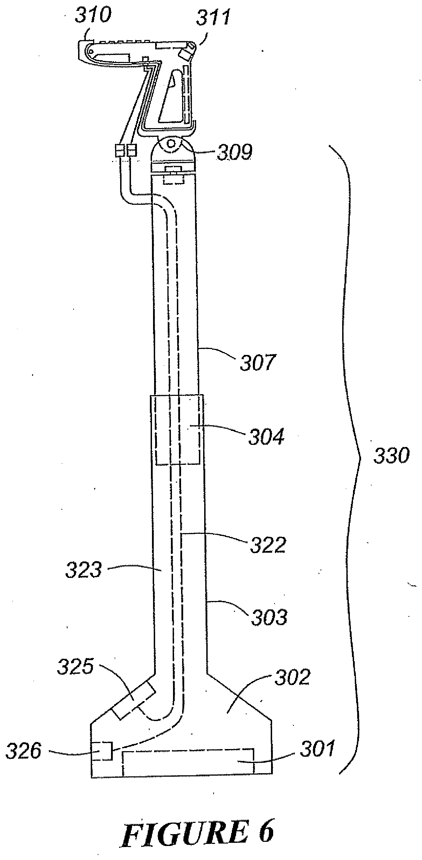

Figure 6 illustrates an example of the apparatus 100 of Figure 2. In Figure 6, "301" represents a weight and corresponds to 130 of Figure 2; "302" represents a support base and corresponds to 114 of Figure 2; "303" represents a lower shaft and corresponds to 132 of Figure 2; "304" represents a shaft height control and corresponds to 140 of Figure 2; "307" represents an upper shaft and corresponds to 134 of Figure 2, "309" represents a rotation/tilting member and corresponds to 142 and 144 of Figure 2; "310" represents a docking station and corresponds to 116 of Figure 2; "311" represents a handheld data capture and identification terminal and corresponds to 102 of Figure 2; "322" and "323" represent the power connection and I/O connection, and correspond to 124 and 128 of Figure 2; "325" represents digital I/O devices and corresponds to 126 of Figure 2; "326" represents a power input connector and corresponds to 122 of Figure 2; and "330" represents a fixture and corresponds to 104 of Figure 2.

The handheld data capture and identification terminal 311 is docked onto the docking station 310 and is securely connected to the fixture 330. The docking station 310 is formed such that the handheld data capture and identification terminal 311 fits inside, with the AIDC sensors (e.g., 170 of Figure 2) protruding from the front, un-obstructed. The top of the shaft is fitted into the docking station 310. The shaft height control member 304 is arranged such that the upper shaft 307 is allowed to slide inside the lower shaft 303 in a telescoping manner, hence altering the length of the fixture 330. The shaft height control member 304 may employ, for example, but not limited to, a pneumatic mechanism, or an oil-damped mechanism to provide a tactile feedback to the operator. The shaft height control member 304 may employ, but not limited to, those disclosed in US Patent Nos. 7,009,840, 6,056,251 and 4,684,098, which are herein incorporated by reference.

In Figure 6, the lower shaft 303 and the support base 302 are integrated and form a single unit component. In Figure 6, the power connection 322 and the I/O connection 323 are routed through the inside of the lower shaft 303 and the upper shaft 307.

Figure 7 illustrates an example of the handheld data capture and identification terminal, the docking member and the positioning member of Figure 6. In Figure 7, "315" represents an image sensor and corresponds to 170B of Figure 2; "319" represents a re-chargeable battery and corresponds to 154 of Figure 2; "321" represents a keypad and corresponds to 150 of Figure 2; "327" represents a docking connector and corresponds to 120 of Figure 2; "328" represents a display and corresponds to 156 of Figure 2; "329" represents one or more than one latch and corresponds to 118 of Figure 2; "332" represents an RFID antenna and corresponds to 171 of Figure 2; "334" represents a wireless network antenna and corresponds to 160 of Figure 2; "336" represents a hinge and corresponds to 142 of Figure 2; and "340" and "342" represent a rotation support and a pin, respectively, and correspond to 144 of Figure 2.

In the description, the terms "(removable) handheld data capture and identification terminal 311" and "(handheld) terminal 311" are used interchangeably.

The housing of the handheld data capture and identification terminal 311 includes a connection member connectable to the one or more than one latch 329 and the docking connector 327. The latch 329 retains the terminal 311 inside the docking station 310, however, allows the terminal 311 to be easily and quickly removed when required. While the terminal 311 is fitted inside the docking station 310, the docking connector 327 makes contact with the terminal 311 such that power and digital connections are maintained.

The hinge 336 is located at the point where the docking station 310 connects to the upper shaft 307. The hinge 336 is pivotally connected to the docking station 310. The docking station 310 moves in a direction 338 via the hinge 336. The bottom of the docking station 310 includes a connector to be connected to the hinge 336. The rotation support 340 is connected to the docking station 310. The rotation support 340 rotates around the pin 342 that is fixed to the upper shaft 307. Thus, the rotation support 340 rotates the docking station 310 around the axis of the shaft (or pin).

The housing of the handheld data capture and identification terminal 311 includes an upper part and a lower part. The user interface (e.g., display, keypads etc) is in the upper part. The lower part has an opening that forms a pistol grip 346. The pistol grip 346 is hold in a hand of the human operator when the operator manually operates the terminal 311.

The shape of the grip 346 is not limited to that of Figures 6-7. In another example, the housing of the handheld data capture and identification terminal 311 may have a handle grip hold by the operator.

The handheld data capture and identification terminal 311 includes one or more than one manual activator for causing one or more than one of the AIDC sensors (e.g., 170A-170E of Figure 2) to become active. The activator may be, for example, but not limited to, a trigger 344 on the pistol grip 346. One or more keys on the keypad 321 may trigger an identification event. These user interfaces may be operable regardless whether the terminal 311 is docked on the docking station 310.

Figure 8 illustrates an example of an object identification and authentication system in accordance with an embodiment of the present invention. The system 400 of Figure 8 includes an apparatus for manual and automatic identification, labeled as 100C. The apparatus 100C may be the same or similar to the apparatus 100 of Figure 2, the apparatus 100A of Figure 3 or the apparatus 100B of Figure 4. The apparatus 100C includes the handheld data capture and identification terminal 102, and a fixture having a support base 114C. The fixture for the apparatus 100C may be the same or similar to the fixture 104 of Figure 2, the fixture 104A of Figure 3 or the fixture 104B of Figure 4. The support base 114C may be the same or similar to the support base 114 of Figure 2, the support base 114A of Figure 3 or the support base 114B of Figure 4.

In Figure 8, the I/O 126, the wireless I/F 158, the controller 162, the AIDC sensors 170 are schematically shown. However, the apparatus 100C may include other components as shown in Figures 2, 3 and 4.

The system 400 includes one or more than one I/O device 402. The I/O device 402 communicates with the I/O connector 126 via one or more than one wired communications link. The I/O device 402 may communicate with the I/O connector 126 via one or more than one wireless communications link, one or more than one wired communications link, or combinations thereof. The I/O device 402 includes, for example, but not limited to, one or more than one visual indicator 404, one or more than one audio indicator 406, one or more than one external proximity detector 408, one or more than one external device 410, or combinations thereof.

The visual indicator 404 is operated by the output of the I/O connector 126. The visual indicator 404 may be a light stack having a plurality of lights (e.g., green, yellow, read, or combinations thereof). The visual indicator 404 may indicate the state/mode of the apparatus 100C or the handheld data capture and identification terminal 102. The audio indicator 406 is operated by the output of the I/O connector 126. The audio indicator 406 creates audible sound and may indicate the state/mode of the apparatus 100C or the terminal 102. The external proximity detector 408 may be provided to detect an object. The detector 408 provides a message associated with the detection result to the I/O connector 126. The message may change the state/mode of the terminal 102. For example, the message from the detector 408 may trigger an identification event and thus activate one or more than one AIDC sensors 170. The external device 410 is operated by the output of the I/O connector 126. The external device 410 may be, but not limited to, a conveyer.

In Figure 8, the visual indicator 404 and the audio indicator 406 are illustrated separately from the apparatus 100C. However, in another example, the visual indicator 404, the audio indicator 406, or a combination thereof may be located in the fixture of the apparatus 100C, the handheld data capture and identification terminal 102 or a combination thereof.

The system 400 includes a server 420 having a database. In Figure 8, the server 420 commutates with the handheld data capture and identification terminal 102 via the wireless network interface 158. In another example, the server 420 may communicate with the terminal 102 via a wired network interface connected to the I/O connector 126. The server 420 may control the state/mode of the terminal 102. The apparatus 100C may operate the I/O device 402 based on the current state/mode instructed by the server 420. The server 420 may directly operate the I/O device 402.

The server 420 may receive, store and analyze information received from the handheld data capture and identification terminal 102. The information provided from the terminal 102 may include local time information. The information provided from the terminal 102 may include data captured by the terminal 102 or data manually input to the terminal 102. The server 420 may detect the presence of an object based on the sensing information, manual input received from the terminal 102 or a combination thereof, and may send a message to the terminal 102 for object identification when the object is detected. The information provided from the terminal 102 may include identification data acquired by the automatic identification process, the manual identification process, or a combination thereof, for authentication. Based on the information provided from the terminal 102, the server 420 authenticates an object. The server 420 sends a message indicating the result of the authentication to the terminal 102. In a further example, the terminal 102 and the server 420 may use a Confidence of Identification (COI) variable for object identification, as described below.

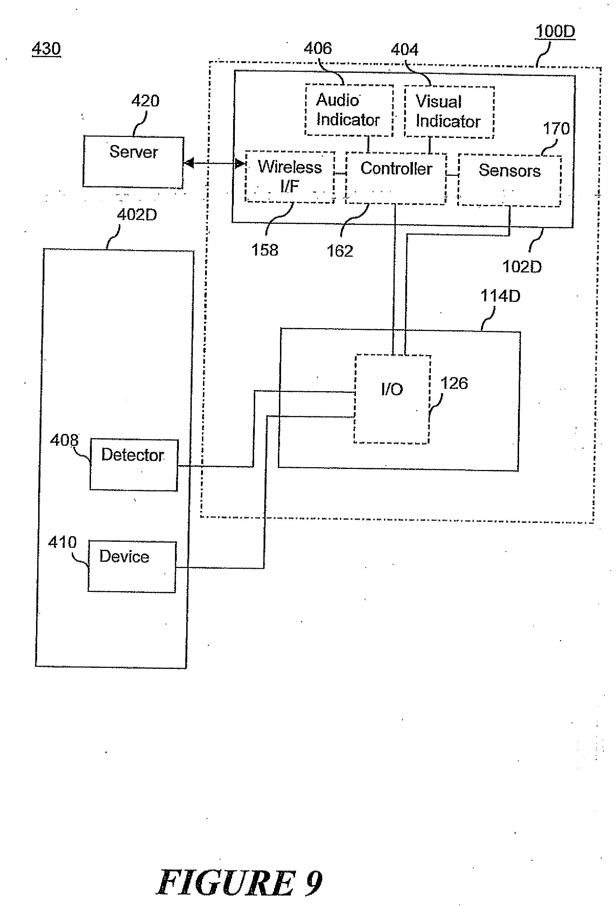

Figure 9 illustrates another example of the object identification and authentication system. The system 430 of Figure 9 includes an apparatus for manual and automatic identification, labeled as 100D. The apparatus 100D may be the same or similar to the apparatus 100 of Figure 2, the apparatus 100A of Figure 3 or the apparatus 100B of Figure 4. The apparatus 100D includes a handheld data capture and identification terminal 102D and a fixture having a support base 114D. The handheld data capture and identification terminal 102D is similar to the terminal 102 of Figure 2. In addition, the terminal 102D includes the visual indicator 404 and the audio indicator 406. The fixture for the apparatus 100D may be the same or similar to the fixture 104 of Figure 2, the fixture 104A of Figure 3 or the fixture 104B of Figure 4. The support base 114D may be the same or similar to the support base 114 of Figure 2, the support base 114A of Figure 3 or the support base 114B of Figure 4.

The apparatus 100D communicates with one or more than one I/O device 402D. The I/O device 402D is similar to the I/O device 402 of Figure 8. The I/O device 402D includes, for example, but not limited to, the external proximity detector 408 and the external device 410. The I/O device 402D may be directly operated by the server 420.

In Figure 9, the I/O 126, the wireless I/F 158, the controller 162, the sensors 170 are schematically shown. However, the apparatus 100D may include other components as shown in Figures 2, 3 and 4.

In Figure 9, the visual indicator 404 and the audio indicator 406 are located in the handheld data capture and identification terminal 102D. However, in another example, the visual indicator 404 and the audio indicator 406 may be located in the fixture for the terminal 102D. In a further example, one of the visual indicator 404 and the audio indicator 406 may be located in the fixture for the terminal 102D, and the other may be located in the terminal 102D.

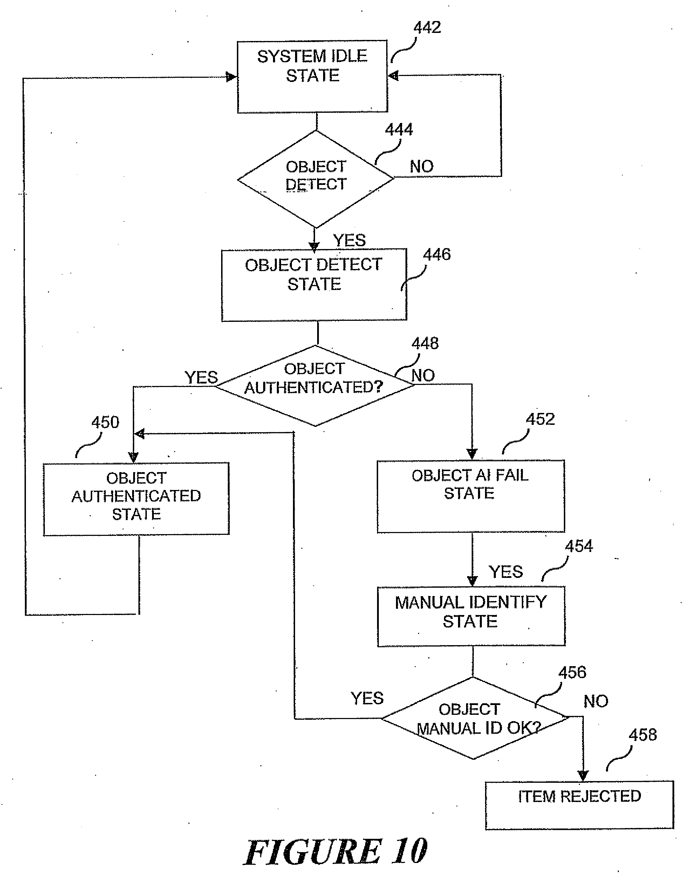

Figure 10 illustrates an example of a method for reliable and rapid object identification and authentication. As an example, the steps of Figure 10 are applied to the system 400 of Figure 8. As described above, one of the visual indicator 404 and the audio indicator 406 or both may be located in the apparatus 100C.

Referring to Figures 8 and 10, when there is no object present in the field of identification (FOI), the system 400 resides in the "System Idle State" (step 442) where the system 400 is waiting for an object to arrive, polling the detection mechanism of the system 400 on a regular basis (step 444). The apparatus 100C is configured for automatic identification. The system 400 determines whether an object is detected (step 444).

In the "System Idle State", the system 400 provides a visual/audio indication that the system 400 is in the "System Idle State". The visual indicator 404 (e.g., light stack) may display a specific light (e.g., yellow light) to indicate this state.

In an example, the detection mechanism may make use of the I/O connector 126 such that the external proximity detector 408 indicates the presence of the object.

In another example, an image sensor (i.e., 170B of Figure 2) on the handheld data capture and identification terminal 102 may be used to detect the object. The image sensor may be intermittently enabled. An image from the image sensor is sent to the server 420 over the wireless network interface 158 and stored on the server 420, for security purposes.

In a further example, the image sensor may also be employed to detect the presence of a suitable identification subject in the field of identification, using the controller 162 to perform image processing on the detected object. In this case, the apparatus 100C determines whether the object is a suitable candidate for identification.

In a further example, the image sent to the server 420 may be analyzed, and a signal may be sent back from the server 420 to the apparatus 100C to indicate that the object is present.

In this state health information is returned to the server 420 on a regular basis. This health data may include results of processes such as enabling the RFID reader (i.e., 170A of Figure 2) and ensuring that a tag which is always in the RF detection zone can be read, enabling the image sensor and ensuring that a static, easy to recognize image can be captured, and the local time according to the controller 162.

When an object is detected ("yes" at step 444), the system 400 transitions into the "Object Detected State" (step 446). The system 400 provides a visual/audio indicator that the system 400 is in the "Object Detected State". The visual indicator 404 (e.g., light stack) indicates that an object has been detected and attempted automatic identification is in progress by flashing one or more than one light.

In the "Object Detected State", the RFID reader (i.e., 170A of Figure 2) is enabled so that if the object has an RFID tag fitted, the RFID tag is read. The image sensor (i.e., 170B of Figure 2) may be enabled to capture an image of the object being identified, and to aid the identification process through pattern recognition. At this time a message may be sent to the server 420 over the wireless network to indicate that the object has been detected. The system 400 attempts to automatically identify the object using all available identification methods (i.e., AIDC sensors 170).

The data acquired by the automatic identification process is sent to the server 420 via the wireless network for authentication. The system 400 determines whether the object is authenticated (step 448). The server 420 compares the data captured by the automatic identification process with information stored in a database. If the server 420 can identify the object based on the comparison, the server 410 sends an authenticated message back to the apparatus 100C. If the server 420 cannot identify the object to a sufficient degree, a not-authenticated message is sent back to the apparatus 100C.

If the apparatus 100C receives the authenticated message from the server 420, the apparatus 100C enters the "Object Authenticated State" (step 450). In the "Object Authenticated State", the RFID reader (i.e., 170A of Figure 2) is turned off. The system 400 provides a visual/audio indication that the system 400 is in the "Object Authenticated State". The visual indicator 404 (e.g., light stack) displays a specific light (e.g., green light) to indicate that the identification process was successful. The audio indicator 406 creates sound to indicate that the successful identification has occurred, such as playing ascending notes in a musical scale.

If the object is to be transported by a conveyer (e.g., 410 of Figure 8), the conveyor is enabled such that the object moves out of the field of identification. If there is no conveyor belt, and the objects are being manually handheld, the green light and audible indication serve to indicate to an observer that the object can continue through the system. After remaining in this state long enough for the object to be removed from the FOI, the system 100C returns to the "System Idle State"(step 442).

If the apparatus 100C does not receive any authenticated message from the server 420, the system enters the "Object Automatic Identification Fail State"(step 452). The visual indicator 404 (e.g., light stack) produces a specific visual output, and the audio indicator 406 creates a specific audible sound, both of which indicate that the Automatic identification has failed. For example, the light stack flashes the red light. The audible signal may be a sequence of descending notes in a musical scale. This audible signal may repeat at regular intervals while in this state, to alert a human operator that action is required. If a conveyor belt (e.g., 410 of Figure 8) is present, the conveyor belt will remain stopped. The apparatus 100C stays in this state until the handheld data capture and identification terminal 102 is removed from the fixture (e.g., 104 of Figure 2). However, the system 400 may transition directly to step 458 if the human operator is not available to manually identify the object.

When the handheld data capture and identification terminal 102 is removed from the fixture (e.g., 104 of Figure 2), the apparatus 100C enters the "Manual Identity State" (step 454). A signal is sent to the server 420, which indicates that the AIDC sensors 170 have been removed from the fixture. In this state, the human operator attempts to identify the object in all available ways such as barcode scanning (i.e., 170C of Figure 2), further close range RFID reading, visual identification of the item by the human operator. When using the visual identification of item, the human operator enters the identity of the object into the handheld data capture and identification terminal 102. The system 400 uses such information in the same way as any other identification data gathered. While in this state, the light stack continues to flash red, but the audible signal may cease, or be reduced in frequency of occurrence.

The system 400 determines whether the object is manually identified (step 456). If the object cannot be identified by the human operator in any way, the object is rejected by the system and removed (step 458). If the object is identified by the human operator, the system 400 enters the "Object Authenticated State" (step 450), and the data gathered through manual identification is sent to the server 420. Manual identification by the human operator always leads to data that will definitely be authenticated (step 450), or the object is rejected from the system 400 (step 458).

In Figure 10, the determination step 444 may be implemented by the server 420 or the terminal 102, and the determination step 456 may be implemented by the server 420 or the terminal 102. In another example, the human operator may make this decision for further data processing.

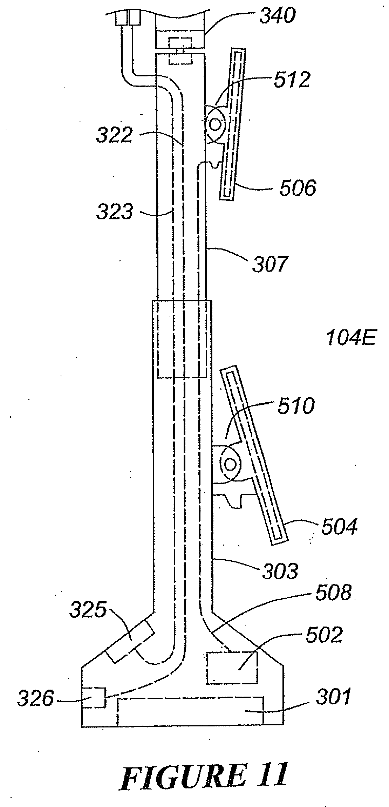

Figure 11 illustrates an example of a fixture in a further embodiment of the present invention. The fixture 140E of Figure 11 is similar to those of Figures 6-7, and includes the weight 301, the lower shaft 303, the upper shaft 307, the I/O connector 325, the power input 326, the power connection 322, and the I/O connection. The fixture 140E further includes an auxiliary RFID reader 502, and antennas 504 and 506. The auxiliary RFID reader 502 is connected to the antennas 504 and 506 via a coaxial cable 508. The antennas 504 and 506 are connected to the lower shaft 303 and the upper shaft 307, respectively. An angle member 510 is provided to connect the antenna 504 and the lower shaft 303 so that the antenna angle is adjustable. The angel member 510 may be a hinge for allowing the antenna 504 to rotate in a certain direction. An angle member 512 is provided to connect the antenna 506 to the upper shaft 307 so that the antenna angle is adjustable. The angle member 512 may be a hinge for allowing the antenna 506 to rotate in a certain direction. The angle members 510 and 512 adjust the antennas 504 and 506 to point in a plurality of directions.

In Figure 11, two antennas 504 and 506 are shown. However, the number of antennas for the auxiliary RFID reader 502 may vary depending on the system design/requirement, and not limited to two. One antenna (504 or 506) may be used for the auxiliary RFID reader 502. However, the multi-antennas 502 and 504 provide greater coverage than that of one antenna, in automatic identification configuration. In Figure 11, one auxiliary RFID reader 502 is shown. However, the number of auxiliary RFID readers is not limited to one and may vary depending on the system design/requirement.

In Figure 11, the tilbelevation controller 142 of Figure 2 and the docking member 108 of Figure 2 are not shown. However, the fixture 140E may include the tilt/elevation controller and the docking member same or similar to those of Figures 6-7.

In a further embodiment, "Confidence of Identification" (COI) is assigned to each object for identification. "COI" is a variable which provides a measure of whether the subject of identification requires further identification before it can continue.

In one example, if an object is identified using RFID (e.g., 170A of Figure 2), this identification information may trigger the server (e.g., 420 of Figures 8 and 9) to request further identification to take place, to ensure accurate identification, and to increase the security of the system. In another example, if an object is identified using RFID, and this identification information suggests that said object should not be in the location where it has been detected, further identification may be requested by the server.

If an object has a COI of "1", the object may be allowed to continue through the system based on a single source of identification (e.g., reading of an RFID tag, reading of a barcode, etc.).

If an object has a COI of "2", the two forms of identification may be required before the object may be allowed to continue. This may trigger a manual identification after an RFID tag read to corroborate the identification based on the RFID read.

All objects apart from those expected to be identified at a particular location may have a COI of greater than "1 ", so that if an unexpected object is detected, further identification would be required to increase the integrity and security of the system.

The object may not be identified to a required confidence associated with its COI. If the COI cannot be met where the object cannot be identified to its required confidence, the object may be rejected from the system.

The information related to COI may be visually provided to an observer through the system (e.g., 100C of Figure 8, 100D of Figure 9).

According to the embodiments of the present invention, objects can be easily identified by the handheld terminal which supports automatic identification and manual identification. When the state of the system is changed or a certain event is occurred (e.g., failure of automatic identification), the operator is alerted. The operator can easily remove the handheld terminal from the fixture for supporting the handheld terminal and take a control of the handheld terminal. Since the handheld terminal includes a plurality of sensors having an RFID reader, the system can identify both of an RFID item and a non-RFID item. The fixture with the handheld terminal has a greater flexibility comparing to conventional fixed portal RFID reader. In addition, the fixture with the handheld terminal can be implemented for a low cost compared to the conventional automatic identification systems.

Various embodiments of the invention may be implemented in one or any combination of hardware, firmware, and software. The invention may also be implemented as instructions contained in or on a machine-readable medium, which may be read and executed by one or more processors to perform the operations described herein. A machine-readable medium may include any mechanism for storing, transmitting, and/or receiving information in a form readable by a machine (e.g., a computer). For example, a machine-readable medium may include a storage medium, such as but not limited to read only memory (ROM); random access memory (RAM); magnetic disk storage media; optical storage media; a flash memory device, etc. A machine-readable medium may also include a propagated signal that has been modulated to encode the instructions, such as but not limited to electromagnetic, optical, or acoustical carrier wave signals.

The present invention has been described with regard to one or more embodiments. However, it will be apparent to persons skilled in the art that a number of variations and modifications can be made without departing from the scope of the invention as defined in the claims.

## Claims

1. A system for object identification, comprising a fixture (104) for a handheld terminal, and a handheld terminal (102), wherein:
the fixture (104) comprises a docking structure;
the handheld terminal (102) is configured to be useable:
(i) as a standalone device; and
(ii) when docked onto the docking structure;
the handheld terminal (102) has one or more than one sensor (170A-170E) for data capture and identification of an object; and
the fixture (104) comprises a docking connector (120) for allowing an external device to communicate with the handheld terminal (102) for automatic identification of the object when the handheld terminal (102) is docked onto the docking structure.

2. A system as claimed in claim 1, comprising at least one of:
a positioning member (112) for positioning the handheld terminal (102) connected to the docking structure to adjust the sensing area of at least one of the one or more than one sensor (170A-170E);
a stabilization member (130) for stabilizing the handheld terminal (102) when the handheld terminal (102) is docked onto the fixture (104);
one or more than one protector (182) for preventing damage to the handheld terminal (102) upon a fault condition when the handheld terminal (102) is connected to the docking structure.

3. A system as claimed in claim 2, wherein the positioning member comprises at least one of:
a height controller (140, 304) for adjusting the height of the fixture (104);
a rotation controller (144, 309) for adjusting the rotation of the handheld terminal (102) about the axis of the fixture (104);
a tilt controller (142, 309) for adjusting the tilt angle of the handheld terminal (102) against the axis of the fixture (104).

4. A system as claimed in claim 3, wherein the fixture (104) comprises a plurality of shaft members (110,132, 134,303,307), and wherein the height controller allows at least one of the shaft members to slide into the other shaft member.

5. A system as claimed in claim 2, wherein the stabilization member comprises at least one of:
a weight member (130, 301) against external force acting on the fixture (104), the terminal or a combination thereof;
a member for fixing the fixture (104) to an external installation;
a member for allowing an external force to be applied to a system having the handheld terminal (102) attached to the fixture (104), without damage to the system or the system tipping over.

6. A system as claimed in claim 2, comprising:
an interface between the external device and the docking connector, and wherein the protector is connected to the interface.

7. A system as claimed in claim 2, wherein the protector includes:
a first input port and a second input port;
a comparator (607) for monitoring a voltage between the first and second input;
a switch for controlling a current flow based on the output from the comparator; and
one or more than one flip-flop (614) connected to the switch for providing an output which is synchronized with a system clock.

8. A system as claimed in any one of claims 1 to 7, comprising:
an auxiliary RFID reader (502), and one or more than one antenna (504,506) for the auxiliary RFID reader.

9. A system as claimed in claim 8, comprising:
an angle member (510,512) for the antennas for the auxiliary RFID reader for pointing in a plurality of directions.

10. A system as claimed in any one of claims 1 to 9, wherein the docking structure comprises:
a docking station (116, 310) for receiving the handheld terminal (102), and
one or more than one latch member (118,329) for removably engaging the handheld terminal with the docking station.

11. A system as claimed in claim 10, wherein the docking station and the one or more than one latch member are located outside the field of view of at least one of the one or more than one sensor (170A-170E).

12. A system as claimed in any one of claims 1 to 11, wherein the docking connector is in a first component and a second component which mate with each other when the handheld terminal (102) is docked on the docking structure, and wherein the first component is connected to the handheld terminal (102) and the second component is connected to the fixture (104).

13. A system as claimed in any one of claim 1 to 12, comprising:
a visual indicator (404) for providing a visual signal, an indicator having a plurality coloured lights, an audio indicator (406) for creating an audio signal or combinations thereof, to indicate the state of the fixture (104), the terminal or a combination thereof.

14. A system as claimed in any one of claim 1 to 13, comprising at least one of:
a power input member (122, 124,322) for providing a power input from the external device to the handheld terminal (102) via the docking connector;
a signal input/output (I/O) member (126, 128, 323) for receiving a signal input from the external device and for transmitting a signal output to the external device, and wherein the signal I/O member is operably connectable to the handheld terminal (102) via the docking connector.

15. A system as claimed in claim 14, wherein the signal I/O member comprises at least one of:
means for sourcing up to a predetermined current, when enabled, such that external hardware is powered;
an interface for a communication with the external device via a communication network.

16. A system as claimed in claim 14, wherein the power input connection accepts AC power, DC power or a combination thereof from the external device.

17. A system as claimed in claim 15, wherein the predetermined current is about 100mA or 1000mA.

18. A system as claimed in claim 14, wherein the signal I/O member comprises:
an interface for a communication with the external device via a communication network having a wireless communication, a wired communication or combination thereof, and
wherein at least one of the one or more than one sensor (170A-170E) implements object detection, object identification or a combination thereof based on the signal input from the interface.

19. A system as claimed in any one of claims 1 to 18, comprising:
a support base (114); and
a shaft (110) on the support base, the docking structure being located at the top of the shaft, the shaft having a grip for allowing the user to hold and operate the handheld terminal (102) docked on the docking structure.

20. A system for object identification according to any previous claim, wherein:
the handheld terminal (102) includes:
one or more than one sensor (170A-170E) for data capture and identification of an object,
the sensor (170A-170E) being automatically or manually activated;
a rechargeable power storage (154) for operation of the handheld terminal (102); and
a housing including a grip (346) held by an operator when operating the handheld terminal as a standalone device, and
the fixture (104) securely supports the terminal.

21. A system as claimed in claim 20, wherein the power storage is chargeable by the power input via the docking connector.

22. A system as claimed in claim 20 or 21, wherein the handheld terminal (102) comprises:
one or more than one trigger (344) for manually triggering a data capture event, a data detection event, an object identification event, an object detection or combinations thereof for at least one of the one or more than one sensor (170A-170E).

23. A system as claimed in claim 22, wherein the one or more than one manual trigger (344) comprises a mechanical trigger.

24. A system as claimed in claim 23, wherein the grip comprises a pistol grip (346), and wherein the mechanical trigger is on the pistol grip.

25. A system as claimed in claim 20, wherein the handheld terminal (102) comprises at least one of:
a human interface (150) for accepting a manual input for the operation of the handheld terminal (102);
an interface for a communication network including a wireless network, a wired network or a combination thereof;
a controller (162) for controlling the function of the handheld terminal (102);
a memory (162), and wherein the controller has access to the memory for the operation of the system;
a visual indicator (404) for providing a visual signal, an indicator having a plurality of coloured lights, an audio indicator (406) for creating an audio signal or combinations thereof, to indicate the state of the fixture (104), the terminal or a combination thereof.

26. A system as claimed in claim 25, wherein data obtained by the one or more than one sensor (170A-170E), the manual input, or a combination thereof is transmittable through the communication network.

27. A system as claimed in claim 20, wherein the handheld terminal (102) comprises:
an interface for a wireless communication with a server (420), and wherein at least one of the one or more than one sensor (170A-170E) implements object detection, object identification, or a combination thereof based on a signal input from the interface.

28. A system as claimed in claim 20, wherein the system communicates with a server through a communication network having a wireless network, a wired network or a combination thereof, the server authenticating the object based on data transmitted via the communication network.

29. A system as claimed in claim 20, wherein the handheld terminal (102) comprises a manual input (150), a server (420) communicating with the system via an interface for a wireless network, a wired network or a combination thereof, and authenticating the object based on data obtained by the one or more than one sensor (170A-170E), the manual input or a combination thereof.

30. A system as claimed in any one of claims 27 to 29, wherein the server (420) controls the state of the handheld terminal (102).

31. A system as claimed in claim 20, wherein at least one of the one or more than one sensor (170A-170E) is capable of automatically identifying an object in response to a detection of the object.

32. A system as claimed in claim 31, wherein the at least one of the one or more than one sensor (170A-170E) automatically identifies the object once one of the one or more than one sensor (170A-170E) detects the object.

33. A system as claimed in any one of claims 20 to 32, wherein at least one of the one or more than one sensor (170A-170E) comprises a Radio Frequency Identification (RFID) reader (170A), a laser barcode scanner (170C), or an image capture device (170B, 170D, 170E).

34. A system as claimed in claim 25, wherein the interface comprises:
a wireless LAN interface, a narrowband interface, a Wi-Max interface, a short-range wireless interface, a Bluetooth interface, a wireless USB, a wireless zigbee or combinations thereof.

35. A system as claimed in claim 25, wherein the memory comprises a non-volatile memory, a volatile memory or a combination thereof.

36. A handheld terminal (102) for data capture and identification, comprising:
one or more than one sensor (170) for data capture and identification of an object, the sensor (170A-170E) being automatically or manually activated, and a rechargeable power storage (154) for operation of the terminal;
a controller (162) for controlling the function of the terminal;
a first interface (150, 321) for manual input by an operator, an input from the first interface being capable of activating at least one of the one or more than one sensor (170A-170E);
a second interface (152, 334) including a wired network interface, a wireless network interface or a combination thereof, an input from the second interface being capable of activating at least one of the one or more than one sensor (170A-170E); and
a housing including:
a grip (346) held by an operator, and
a connection member (327) for removably connecting to the fixture (104) of any one of claims 1 to 19 such that the power storage (154) is chargeable through the connection member and a signal communication is implemented between the handheld terminal (102) and the fixture (104) via the connection member, whereby an external device can communicate with the handheld terminal (102) for automatic identification of the object.

37. A method for object identification and authentication by a system according to any one of claims 1 to 35, the handheld terminal (102) including one or more than one sensor (170A-170E) for data capture and identification, the method comprising the steps of:
in an idle state (442), polling a detection mechanism to detect (444) an object, and entering (446) an object detect state when the object is detected;
in the object detect state, automatically identifying the object by at least one of the one or more than one sensor (170A-170E) in the handheld terminal (102) docked on the fixture (104), entering (448) an authentication state (450) when the object is identified or entering (448) an automatic identification fail state (452) when the system fails to automatically identify the object;
in the authentication state, authenticating the object and entering the idle state (442);
in the automatic identification fail state, rejecting the object or removing the terminal from the fixture (104) and entering a manual identification state (454);
in the manual identification state, operating the handheld terminal (102) by an operator without the fixture (104) to manually identify the object, and entering (456) the authentication state (450) when the object is manually identified or rejecting (458) the object when the system fails to manually identify the object.

38. A method according to claim 37, further comprising repeating the automatic identification or the manual identification based on a Confidence of Identification (COI) assigned to the object.

## Patentansprüche

1. System zur Objektidentifizierung, welches eine Haltevorrichtung (104) für ein Handendgerät aufweist, sowie ein Handendgerät (102), wobei:
die Halteeinrichtung (104) eine Andockstruktur aufweist;
das Handendgerät (102) konfiguriert ist, um nutzbar zu sein:
(i) als eigenständiges Gerät; und
(ii) wenn es an der Andockstruktur angedockt ist;
wobei das Handendgerät (102) einen oder mehr als einen Sensor (170A - 170E) zur Datenaufnahme und Identifizierung eines Objektes hat; und
die Haltevorrichtung (104) einen Andockverbinder (120) umfasst, um es einem externen Gerät zu gestatten, mit dem Handendgerät (102) zur automatischen Identifizierung des Objektes zu kommunizieren, wenn das Handendgerät (102) an der Andockstruktur angedockt ist.

2. System nach Anspruch 1, das wenigstens eines von Folgendem aufweist:
ein Positionierungselement (112) zum Positionieren des Handendgerätes (102), welches mit der Andockstruktur verbunden ist, um den Sensierungsbereich von wenigstens einem von dem einem oder den mehreren Sensoren (170A - 170E) einzustellen;
ein Stabilisierungselement (130) zum Stabilisieren des Handendgerätes (102), wenn das Handendgerät (102) an der Haltevorrichtung (104) angedockt ist;
einen oder mehr als ein Protektor (182) zum Verhindern einer Beschädigung des Handendgerätes (102) auf eine Fehlerbedingung, wenn das Handendgerät (102) mit der Andockstruktur verbunden ist.

3. System nach Anspruch 2, wobei das Positionierungselement wenigstens eines von Folgendem aufweist:
einen Höhen-Controller (140, 304) zum Einstellen der Höhe der Haltevorrichtung (104);
einen Rotations-Controller (144, 309) zum Einstellen der Rotation des Handendgerätes (102) um die Achse der Haltevorrichtung (104);
einen Neigungs-Controller (142, 309) zum Einstellen des Neigungswinkels des Handendgerätes (102) gegen die Achse der Haltevorrichtung (104).

4. System nach Anspruch 3, wobei die Haltevorrichtung (104) eine Mehrzahl von Schaftelementen (110, 132, 134, 303, 307) umfasst und wobei der Höhen-Controller wenigstens einem der Schaftelemente gestattet, in das andere Schaftelement zu gleiten.

5. System nach Anspruch 2, wobei das Stabilisierungselement wenigstens eines von Folgendem aufweist:
ein Gewichtselement (130, 310) gegen äußere Kraft, die auf die Haltevorrichtung (104),
das Endgerät oder eine Kombination davon wirkt;
ein Element zum Fixieren der Haltevorrichtung (104) an einer externen Installation;
ein Element zum Gestatten, das eine externe Kraft auf das System, bei welchem das Handendgerät (102) an die Haltevorrichtung (104) angebracht ist, angewendet wird, ohne dass das System beschädigt würde oder das System umkippt.

6. System nach Anspruch 2, umfassend:
eine Schnittstelle zwischen dem externen Gerät und dem Andockverbinder, wobei der Protektor mit der Schnittstelle verbunden ist.

7. System nach Anspruch 2, wobei der Protektor umfasst:
einen ersten Eingangsport und einen zweiten Eingangsport;
einen Vergleicher (607) zum Überwachen einer Spannung zwischen dem ersten und dem zweiten Eingang;
einen Schalter zum Steuern eines Stromflusses, basierend auf der Ausgabe des Vergleichers; und
ein oder mehr als ein Flip-Flop (614), die mit dem Schalter zum Bereitstellen einer Ausgabe, welcher mit einem Systemtakt synchronisiert ist, verbunden sind.

8. System nach einem der Ansprüche 1 bis 7, umfassend:
einen Hilfs-RFID-Leser (502) und eine oder mehr als eine Antenne (504, 506) für den Hilfs-RFID-Leser.

9. System nach Anspruch 8, umfassend:
ein Winkelelement (510, 512) für die Antennen für den Hilfs-RFID-Leser zum Zeigen in eine Mehrzahl von Richtungen.

10. System nach einem der Ansprüche 1 bis 9, wobei die Andockstruktur umfasst:
eine Andockstation (116, 310) zum Aufnehmen des Handendgerätes (102), und
ein oder mehr als ein Riegelelement (118, 329) zum entfernbaren Angreifen des Handendgerätes mit der Andockstation.

11. System nach Anspruch 10, wobei die Andockstation und das eine oder mehr als eine Riegelelement außerhalb des Gesichtsfeldes von wenigstens einem von dem einen oder den mehreren Sensoren (170A - 170E) angeordnet sind.

12. System nach einem der Ansprüche 1 bis 11, wobei sich der Andockverbinder in einer ersten Komponente und einer zweiten Komponente befindet, die miteinander gepaart sind, wenn das Handendgerät (102) an die Andockstruktur angedockt ist, und wobei die erste Komponente mit dem Handendgerät (102) verbunden ist und die zweite Komponente mit der Haltevorrichtung (104) verbunden ist.

13. System nach einem der Ansprüche 1 bis 12, umfassend:
einen visuellen Indikator (404) zum Bereitstellen eines visuellen Signals, einen Indikator mit einer Mehrzahl farbiger Lichter, einen Audioindikator (406) zum Erzeugen eines Audiosignals oder Kombinationen davon, um den Status der Haltevorrichtung (104), des Endgerätes oder einer Kombination davon anzuzeigen.

14. System nach einem der Ansprüche 1 bis 13, das wenigsten eines von Folgendem umfasst:
ein Energieeingabeelement (122, 124, 322) zum Bereitstellen einer Energieeingabe von dem externen Gerät zu dem Handendgerät (102) über den Andockverbinder;
ein Signal-Eingabe/Ausgabe-Element ("Input/Output" (I/O)) (126, 128, 323) zum Empfangen einer Signaleingabe von dem externen Gerät und zum Übertragen einer Signalausgabe zu dem externen Gerät, wobei das Signal-I/O-Element wirksam mit dem Handendgerät (102) über den Andockverbinder verbindbar ist.

15. System nach Anspruch 14, wobei das Signal-I/O-Element wenigstens eines von Folgendem umfasst:
Mittel zum Hochfahren auf einen vorbestimmten Strom, wenn aktiviert, so dass eine externe Hardware mit Energie versorgt wird;
eine Schnittstelle für eine Kommunikation mit dem externen Gerät über ein Kommunikationsnetzwerk.

16. System nach Anspruch 14, wobei die Energieeingabeverbindung Wechselstrom (AC), Gleichstrom (DC) oder eine Kombination davon von dem externen Gerät akzeptiert.

17. System nach Anspruch 15, wobei der vorbestimmte Strom etwa 100 mA oder 1000 mA beträgt.

18. System nach Anspruch 14, wobei das Signal-I/O-Element umfasst:
eine Schnittstelle für eine Kommunikation mit dem externen Gerät über ein Kommunikationsnetzwerk, das eine drahtlose Kommunikation, eine leitungsgebundene Kommunikation oder eine Kombination davon aufweist, und
wobei wenigstens einer von dem einem oder den mehreren Sensoren (170A - 170E) eine Objekterfassung, eine Objektidentifizierung oder eine Kombination davon basierend auf der Signaleingabe von der Schnittstelle implementiert.

19. System nach einem der Ansprüche 1 bis 18, umfassend:
eine Trägerbasis (114); und
einen Schaft (110) auf der Trägerbasis, wobei die Andockstruktur an der Oberseite des Schaftes angeordnet ist, wobei der Schaft einen Griff aufweist, um dem Nutzer zu gestatten, das Handendgerät (102), das an die Andockstruktur angedockt ist, zu halten und zu betreiben.

20. System zur Objektidentifizierung nach einem der vorhergehenden Ansprüche, wobei:
das Handendgerät (102) umfasst:
einen oder mehr als einen Sensor (170A - 170E) zur Datenaufnahme und
Identifizierung eines Objektes, wobei der Sensor (170A - 170E) automatisch oder manuell aktiviert wird;
einen wieder aufladbaren Energiespeicher (154) zum Betreiben des Handendgerätes (102); und
ein Gehäuse mit einem Griff (346), der durch einen Bediener gehalten wird, wenn er das Handendgerät als ein eigenständiges Gerät betreibt, und
die Haltevorrichtung (104) das Endgerät sicher trägt.

21. System nach Anspruch 20, wobei der Energiespeicher durch die Energieeingabe über den Andockverbinder aufladbar ist.

22. System nach Anspruch 20 oder 21, wobei das Handendgerät (102) umfasst:
einen oder mehr als einen Auslöser (344) zum manuellen Auslösen eines Datenaufnahmeereignisses, eines Datenerfassungsereignisses, eines Objektidentifizierungsereignisses, einer Objektidentifizierung oder Kombinationen davon für wenigstens einen von dem einen oder den mehreren Sensoren (170A - 170E).

23. System nach Anspruch 22, wobei der eine oder mehr als ein manueller Auslöser (344) einen mechanischen Auslöser umfassen.

24. System nach Anspruch 23, wobei der Griff einen Pistolengriff (346) umfasst und wobei der mechanische Auslöser an dem Pistolengriff ist.

25. System nach Anspruch 20, wobei das Handendgerät (102) wenigstens eines von Folgendem umfasst:
eine Mensch-Schnittstelle (150) zum Annehmen einer manuellen Eingabe für den Betrieb des Handendgerätes (102);
eine Schnittstelle für ein Kommunikationsnetzwerk einschließlich eines drahtlosen Netzwerks, eines leitungsgebundenen Netzwerks oder einer Kombination davon;
einen Controller (162) zum Steuern der Funktion des Handendgerätes (102);
einen Speicher (162), wobei der Controller Zugriff auf den Speicher für den Betrieb des Systems hat;
einen visuellen Indikator (404) zum Bereitstellen eines visuellen Signals, einen Indikator mit einer Mehrzahl von farbigen Lichtern, einen Audioindikator (406) zum Erzeugen eines Audiosignals oder Kombinationen davon zum Anzeigen des Zustandes der Haltevorrichtung (104), des Endgerätes oder einer Kombination davon.

26. System nach Anspruch 25, wobei Daten, die durch den einen oder die mehreren Sensoren (170A- 170E) erhalten werden, die manuelle Eingabe oder eine Kombination davon durch das Kommunikationsnetzwerk übertragbar sind.

27. System nach Anspruch 20, wobei das Handendgerät (102) umfasst:
eine Schnittstelle für eine drahtlose Kommunikation mit einem Server (420), wobei wenigstens einer von dem einen oder den mehreren Sensoren (170A - 170E) eine Objekterfassung, eine Objektidentifizierung oder eine Kombination davon basierend auf einer Signaleingabe von der Schnittstelle implementiert.

28. System nach Anspruch 20, wobei das System mit einem Server über ein Kommunikationsnetzwerk mit einem drahtlosen Netzwerk, einem leitungsgebundenen Netzwerk oder einer Kombination davon kommuniziert, wobei der Server das Objekt basierend auf Daten, die über das Kommunikationsnetzwerk übertragen werden, authentifiziert.

29. System nach Anspruch 20, wobei das Handendgerät (102) einen manuellen Eingang (150) umfasst, wobei ein Server (420) mit dem System über eine Schnittstelle für ein drahtloses Netzwerk, ein leitungsgebundenes Netzwerk oder eine Kombination davon kommuniziert, sowie eine Authentifizierung des Objektes basierend auf Daten, die durch den einen oder die mehreren Sensoren (170A - 170E), die manuelle Eingabe oder eine Kombination davon erhalten werden.

30. System nach einem der Ansprüche 27 bis 29, wobei der Server (420) den Zustand des Handendgerätes (102) steuert.

31. System nach Anspruch 20, wobei wenigstens einer von dem einen oder den mehreren Sensoren (170A- 170E) in der Lage ist, ein Objekt in Reaktion auf eine Erfassung des Objektes automatisch zu identifizieren.

32. System nach Anspruch 31, wobei der wenigstens eine von dem einen oder den mehreren Sensoren (170A- 170E) das Objekt automatisch identifiziert, sobald einer von dem einen oder den mehreren Sensoren (170A - 170E) das Objekt erfasst.

33. System nach einem der Ansprüche 20 bis 32, wobei wenigstens einer von dem einen oder den mehreren Sensoren (170A - 170E) einen Funkfrequenz-Identifizierungs-Leser (RFID-Leser) (170A), einen Laser-Barcode-Scanner (170C) oder ein Bildaufnahmegerät (170B, 170D, 170E) aufweist.

34. System nach Anspruch 25, wobei die Schnittstelle aufweist:
eine Drahtlos-LAN-Schnittstelle, eine Schmalband-Schnittstelle, eine Wi-Max-Schnittstelle, eine kurzreichweitige drahtlose Schnittstelle, eine Bluetooth-Schnittstelle, ein drahtloses USB, eine drahtlose ZigBee oder Kombinationen davon.

35. System nach Anspruch 25, wobei der Speicher einen nichtflüchtigen Speicher, einen flüchtigen Speicher oder eine Kombination davon umfasst.

36. Handendgerät (102) für eine Datenaufnahme und zur Identifizierung, umfassend:
einen oder mehr als einen Sensor (170) für eine Datenaufnahme und eine Identifizierung eines Objektes, wobei der Sensor (170A - 170E) automatisch oder manuell aktiviert wird, sowie einen wieder aufladbaren Energiespeicher (154) zum Betreiben des Endgerätes;
einen Controller (162) zum Steuern der Funktion des Endgerätes,
eine erste Schnittstelle (150, 321) für eine manuelle Eingabe durch einen Betreiber, wobei eine Eingabe von der ersten Schnittstelle in der Lage ist, wenigstens einen von dem einen oder den mehreren Sensoren (170A - 170E) zu aktivieren;
eine zweite Schnittstelle (152, 334) einschließlich einer leitungsgebundenen Netzwerkschnittstelle, einer Drahtlos-Netzwerkschnittstelle oder einer Kombination davon, wobei eine Eingabe von der zweiten Schnittstelle in der Lage ist, wenigstens einen von dem einen oder den mehreren Sensoren (170A - 170E) zu aktivieren;
ein Gehäuse mit:
einem Griff (346), der durch einen Betreiber gehalten wird, und
ein Verbindungselement (327) für ein entfernbares Verbinden mit der Haltevorrichtung (104) nach einem der Ansprüche 1 bis 19, so dass der Energiespeicher (154) durch das Verbindungselement aufladbar ist und eine Signalkommunikation zwischen dem Handendgerät (102) und der Haltevorrichtung (104) über das Verbindungselement implementiert wird, wobei ein externes Gerät mit dem Handendgerät (102) für eine automatische Identifizierung des Objektes kommunizieren kann.

37. Verfahren zur Objektidentifizierung und zur Authentifizierung durch ein System nach einem der Ansprüche 1 bis 35, wobei das Handendgerät (102) einen oder mehr als einen Sensor (170A - 170E) für eine Datenaufnahme und eine Identifizierung enthält, wobei das Verfahren die Schritte aufweist:
in einem Leerlaufzustand (442), Aufrufen eines Erfassungsmechanismus, ein Objekt zu erfassen (444) und Eintreten (446) in einen Objekterfassungszustand, wenn das Objekt erfasst wird;
in dem Objekterfassungszustand, automatisches Identifizieren des Objektes durch wenigstens einen von dem einen oder den mehreren Sensoren (170A- 170E) in dem Handendgerät (102), das an die Haltevorrichtung (104) angedockt ist, Eintreten (448) in einen Authentifizierungszustand (450), wenn das Objekt identifiziert wird, oder Eintreten (448) in einen automatischen Identifizierungsfehlerzustand (452), wenn es fehlschlägt, dass das System das Objekt automatisch identifiziert;
in dem Authentifizierungszustand, Authentifizieren des Objektes und Eintreten in den Leerlaufzustand (442);
in dem automatischen Identifizierungsfehlerzustand, zurückweisendes Objektes oder Entfernen des Endgerätes von der Haltevorrichtung (104) und Eintreten in einen manuellen Identifizierungszustand (454);
in dem manuellen Identifizierungszustand, Betreiben des Handendgerätes (102) durch einen Betreiber ohne die Haltevorrichtung (104), um das Objekt manuell zu identifizieren, und Eintreten (456) in den Authentifizierungszustand (450), wenn das Objekt manuell identifiziert wird, oder Zurückweisen (458) des Objektes, wenn es fehlschlägt, dass das System das Objekt manuell identifiziert.

38. Verfahren nach Anspruch 37, das weiterhin ein Wiederholen der automatischen Identifikation oder der manuellen Identifikation basierend auf einer Zuverlässigkeit der Identifizierung ("Confidence of Identification" (COI)), die dem Objekt zugewiesen ist, aufweist.

## Revendications

1. Système d'identification d'objet, comprenant un accessoire (104) pour un terminal portatif, et un terminal portatif (102), dans lequel :
l'accessoire (104) comprend une structure d'accueil ;
le terminal portatif (102) est configuré de manière à être utilisable :
(i) en qualité de dispositif autonome ; et
(ii) lorsqu'il est ancré sur la structure d'accueil ;
le terminal portatif (102) présente un ou plus d'un capteur (170A - 170E) permettant une capture de données et l'identification d'un objet ; et
l'accessoire (104) comprend un connecteur d'accueil (120) pour permettre à un dispositif externe de communiquer avec le terminal portatif (102) en vue d'une identification automatique de l'objet lorsque le terminal portatif (102) est ancré sur la structure d'accueil.

2. Système selon la revendication 1, comprenant au moins l'un parmi :
un élément de positionnement (112) destiné à positionner le terminal portatif (102) connecté à la structure d'accueil en vue d'ajuster la zone de détection d'au moins l'un dudit un ou plus d'un capteur (170A - 170E) ;
un élément de stabilisation (130) destiné à stabiliser le terminal portatif (102) lorsque le terminal portatif (102) est ancré sur l'accessoire (104) ;
un ou plus d'un élément de protection (182) destiné à éviter d'endommager le terminal portatif (102) en cas d'état défectueux lorsque le terminal portatif (102) est connecté à la structure d'accueil.

3. Système selon la revendication 2, dans lequel l'élément de positionnement comprend au moins l'un parmi :
un module de commande de hauteur (140, 304) destiné à ajuster la hauteur de l'accessoire (104) ;
un module de commande de rotation (144, 309) destiné à ajuster la rotation du terminal portatif (102) autour de l'axe de l'accessoire (104) ;
un module de commande d'inclinaison (142, 309) destiné à ajuster l'angle d'inclinaison du terminal portatif (102) relativement à l'axe de l'accessoire (104).

4. Système selon la revendication 3, dans lequel l'accessoire (104) comprend une pluralité d'éléments d'arbre (110, 132, 134, 303, 307), et dans lequel le module de commande de hauteur permet à au moins l'un des éléments d'arbre de coulisser dans l'autre élément d'arbre.

5. Système selon la revendication 2, dans lequel l'élément de stabilisation comprend au moins l'un parmi :
un élément de poids (130, 301) par rapport à une force externe exercée sur l'accessoire (104), le terminal ou une combinaison connexe ;
un élément destiné à fixer l'accessoire (104) à une installation externe ;
un élément destiné à permettre l'application d'une force externe à un système présentant le terminal portatif (102) fixé à l'accessoire (104), sans endommager le système ou sans faire basculer le système.

6. Système selon la revendication 2, comprenant :
une interface entre le dispositif externe et le connecteur d'accueil, et dans lequel l'élément de protection est connecté à l'interface.

7. Système selon la revendication 2, dans lequel l'élément de protection inclut :
un premier port d'entrée et un second port d'entrée ;
un comparateur (607) destiné à surveiller une tension entre la première entrée et la seconde entrée ;
un commutateur pour commander un flux de courant sur la base de la sortie du comparateur ; et
une ou plus d'une bascule bistable (614) connectée au commutateur, en vue de fournir une sortie qui est synchronisée avec une horloge système.

8. Système selon l'une quelconque des revendications 1 à 7, comprenant :
un lecteur RFID auxiliaire (502) et une ou plus d'une antenne (504, 506) pour le lecteur RFID auxiliaire.

9. Système selon la revendication 8, comprenant :
un élément angulaire (510, 512) pour les antennes, permettant au lecteur RFID auxiliaire de pointer dans une pluralité de directions.

10. Système selon l'une quelconque des revendications 1 à 9, dans lequel la structure d'accueil comprend :
une station d'accueil (116, 310) destinée à accueillir le terminal portatif (102) ; et
un ou plus d'un élément de verrouillage (118, 329) pour mettre en prise de manière amovible le terminal portatif avec la station d'accueil.

11. Système selon la revendication 10, dans lequel la station d'accueil et ledit un ou plus d'un élément de verrouillage sont situés hors du champ de visée d'au moins l'un dudit un ou plus d'un capteur (170A - 170E).

12. Système selon l'une quelconque des revendications 1 à 11, dans lequel le connecteur d'accueil est situé dans un premier composant et un second composant qui s'accouplent mutuellement lorsque le terminal portatif (102) est ancré sur la structure d'accueil, et dans lequel le premier composant est connecté au terminal portatif (102) et le second composant est connecté à l'accessoire (104).

13. Système selon l'une quelconque des revendications 1 à 12, comprenant:
un indicateur visuel (404) destiné à fournir un signal visuel, un indicateur présentant une pluralité de lumières colorées, un indicateur audio (406) destiné à créer un signal audio, ou des combinaisons connexes, pour indiquer l'état de l'accessoire (104), du terminal ou d'une combinaison connexe.

14. Système selon l'une quelconque des revendications 1 à 13, comprenant au moins l'un parmi :
un élément d'entrée d'énergie (122, 124, 322) destiné à fournir une entrée d'énergie du dispositif externe au terminal portatif (102) par l'intermédiaire du connecteur d'accueil ;
un élément d'entrée/sortie (I/O) de signal (126, 128, 323) destiné à recevoir une entrée de signal en provenance du dispositif externe et à transmettre une sortie de signal au dispositif externe, et dans lequel l'élément I/O de signal peut être connecté de manière fonctionnelle au terminal portatif (102) par l'intermédiaire du connecteur d'accueil.

15. Système selon la revendication 14, dans lequel l'élément I/O de signal comprend au moins l'un parmi :
un moyen d'approvisionnement jusqu'à un courant prédéterminé, lorsqu'il est activé, de sorte que le matériel externe est alimenté ;
une interface permettant la communication avec le dispositif externe par l'intermédiaire d'un réseau de communication.

16. Système selon la revendication 14, dans lequel la connexion d'entrée d'énergie accepte un courant alternatif, un courant continu, ou une combinaison connexe, en provenance du dispositif externe.

17. Système selon la revendication 15, dans lequel le courant prédéterminé est d'environ 100 mA ou 1 000 mA.

18. Système selon la revendication 14, dans lequel l'élément I/O de signal comprend :
une interface permettant une communication avec le dispositif externe, par l'intermédiaire d'un réseau de communication disposant d'une communication sans fil, d'une communication filaire ou d'une combinaison connexe ; et
dans lequel au moins l'un dudit un ou plus d'un capteur (170A - 170E) met en oeuvre une détection d'objet, une identification d'objet ou une combinaison connexe, sur la base de l'entrée de signal provenant de l'interface.

19. Système selon l'une quelconque des revendications 1 à 18, comprenant:
un socle de support (114) ; et
un arbre (110) sur le socle de support, la structure d'accueil étant située dans la partie supérieure de l'arbre, l'arbre présentant une poignée pour permettre à l'utilisateur de maintenir et d'exploiter le terminal portatif (102) ancré sur la structure d'accueil.

20. Système d'identification d'objet selon l'une quelconque des revendications précédentes, dans lequel :
le terminal portatif (102) inclut :
un ou plus d'un capteur (170A - 170E) permettant une capture de données et l'identification d'un objet, le capteur (170A - 170E) étant activé automatiquement ou manuellement ;
un stockage d'énergie rechargeable (154) permettant le fonctionnement du terminal portatif (102) ; et
un boîtier incluant une poignée (346) maintenue par un opérateur lors de l'utilisation du terminal portatif en qualité de dispositif autonome ; et
l'accessoire (104) prend fermement en charge le terminal.

21. Système selon la revendication 20, dans lequel le stockage d'énergie peut être chargé par l'énergie appliquée en entrée par l'intermédiaire du connecteur d'accueil.

22. Système selon la revendication 20 ou 21, dans lequel le terminal portatif (102) comprend :
un ou plus d'un déclencheur (344) pour déclencher manuellement un événement de capture de données, un événement de détection de données, un événement d'identification d'objet, une détection d'objet, ou des combinaisons connexes, pour au moins l'un dudit un ou plus d'un capteur (170A - 170E).

23. Système selon la revendication 22, dans lequel ledit un ou plus d'un déclencheur manuel (344) comprend un déclencheur mécanique.

24. Système selon la revendication 23, dans lequel la poignée comprend une poignée-pistolet (346), et dans lequel le déclencheur mécanique est situé sur la poignée-pistolet.

25. Système selon la revendication 20, dans lequel le terminal portatif (102) comprend au moins l'un parmi :
une interface homme (150) destinée à accepter une entrée manuelle en vue du fonctionnement du terminal portatif (102) ;
une interface pour un réseau de communication, notamment un réseau sans fil, un réseau filaire ou une combinaison connexe ;
un contrôleur (162) destiné à commander la fonction du terminal portatif (102) ;
une mémoire (162), et dans lequel le contrôleur a accès à la mémoire en vue du fonctionnement du système ;
un indicateur visuel (404) destiné à fournir un signal visuel, un indicateur présentant une pluralité de lumières colorées, un indicateur audio (406) destiné à créer un signal audio ou des combinaisons connexes, en vue d'indiquer l'état de l'accessoire (104), du terminal ou d'une combinaison connexe.

26. Système selon la revendication 25, dans lequel des données obtenues par ledit un ou plus d'un capteur (170A - 170E), l'entrée manuelle, ou une combinaison connexe, peuvent être transmises à travers le réseau de communication.

27. Système selon la revendication 20, dans lequel le terminal portatif (102) comprend :
une interface pour une communication sans fil avec un serveur (420), et dans lequel au moins l'un dudit un ou plus d'un capteur (170A - 170E) met en oeuvre une détection d'objet, une identification d'objet, ou une combinaison connexe, sur la base d'un signal appliqué en entrée à partir de l'interface.

28. Système selon la revendication 20, dans lequel le système communique avec un serveur à travers un réseau de communication, notamment un réseau sans fil, un réseau filaire ou une combinaison connexe, le serveur authentifiant l'objet sur la base de données transmises par l'intermédiaire du réseau de communication.

29. Système selon la revendication 20, dans lequel le terminal portatif (102) comprend une entrée manuelle (150), un serveur (420) communiquant avec le système par l'intermédiaire d'une interface pour un réseau sans fil, un réseau filaire ou une combinaison connexe, et authentifiant l'objet sur la base des données obtenues par ledit un ou plus d'un capteur (170A - 170E), l'entrée manuelle ou une combinaison connexe.

30. Système selon l'une quelconque des revendications 27 à 29, dans lequel le serveur (420) commande l'état du terminal portatif (102).

31. Système selon la revendication 20, dans lequel au moins l'un dudit un ou plus d'un capteur (170A - 170E) est en mesure d'identifier automatiquement un objet en réponse à une détection de l'objet.

32. Système selon la revendication 31, dans lequel ledit au moins l'un dudit un ou plus d'un capteur (170A - 170E) identifie automatiquement l'objet dès lors que l'un dudit un ou plus d'un capteur (170A - 170E) détecte l'objet.

33. Système selon l'une quelconque des revendications 20 à 32, dans lequel au moins l'un dudit un ou plus d'un capteur (170A - 170E) comprend un lecteur d'identification par radiofréquence (RFID) (170A), un scanneur de codes à barres à laser (170C) ou un dispositif de capture d'images (170B, 170D, 170E).

34. Système selon la revendication 25, dans lequel l'interface comprend :
une interface de réseau LAN sans fil, une interface à bande étroite, une interface Wi-Max, une interface sans fil à courte portée, une interface Bluetooth, un port USB sans fil, une interface de réseau ZigBee sans fil, ou des combinaisons connexes.

35. Système selon la revendication 25, dans lequel la mémoire comprend une mémoire non volatile, une mémoire volatile ou une combinaison connexe.

36. Terminal portatif (102) pour une identification et une capture de données, comprenant :
un ou plus d'un capteur (170) pour une capture de données et l'identification d'un objet, le capteur (170A - 170E) étant activé automatiquement ou manuellement, et un stockage d'énergie rechargeable (154) permettant le fonctionnement du terminal ;
un contrôleur (162) destiné à gérer la fonction du terminal ;
une première interface (150, 321) pour une entrée manuelle par un opérateur, dans lequel une entrée à partir de la première interface est en mesure d'activer au moins l'un dudit un ou plus d'un capteur (170A - 170E);
une seconde interface (152, 334) incluant une interface de réseau filaire, une interface de réseau sans fil ou une combinaison connexe, dans lequel une entrée à partir de la seconde interface est en mesure d'activer au moins l'un dudit un ou plus d'un capteur (170A - 170E) ; et
un boîtier, incluant :
une poignée (346) maintenue par un opérateur ; et
un élément de connexion (327) destiné à se connecter de manière amovible à l'accessoire (104) selon l'une quelconque des revendications 1 à 19, de sorte que le stockage d'énergie (154) peut être chargé par le biais de l'élément de connexion, et une communication de signal est mis en oeuvre entre le terminal portatif (102) et l'accessoire (104), par l'intermédiaire de l'élément de connexion, moyennant quoi un dispositif externe peut communiquer avec le terminal portatif (102) en vue d'une identification automatique de l'objet.

37. Procédé d'authentification et d'identification d'objet par un système selon l'une quelconque des revendications 1 à 35, dans lequel le terminal portatif (102) inclut un ou plus d'un capteur (170A - 170E) permettant une identification et une capture de données, le procédé comprenant les étapes ci-dessous consistant à :
dans un état de veille (442), inviter un mécanisme de détection à détecter (444) un objet, et entrer dans un état de détection d'objet (446) lorsque l'objet est détecté ;
dans l'état de détection d'objet, identifier automatiquement l'objet par le biais d'au moins l'un dudit un ou plus d'un capteur (170A - 170E) dans le terminal portatif (102) ancré sur l'accessoire (104), entrer (448) dans un état d'authentification (450) lorsque l'objet est identifié, ou entrer (448) dans un état d'échec d'identification automatique (452) lorsque le système ne parvient pas à identifier automatiquement l'objet ;
dans l'état d'authentification, authentifier l'objet et entrer dans l'état de veille (442) ;
dans l'état d'échec d'identification automatique, rejeter l'objet ou enlever le terminal de l'accessoire (104), et entrer dans un état d'identification manuelle (454) ;
dans l'état d'identification manuelle, faire fonctionner le terminal portatif (102) par un opérateur sans l'accessoire (104), en vue d'identifier manuellement l'objet, et entrer (456) dans l'état d'authentification (450) lorsque l'objet est identifié manuellement, ou rejeter (458) l'objet lorsque le système ne parvient pas à identifier manuellement l'objet.

38. Procédé selon la revendication 37, comprenant en outre l'étape consistant à répéter l'identification automatique ou l'identification manuelle, sur la base d'une valeur de confiance d'identification (COI) affectée à l'objet.
